(19) **Europäisches Patentamt / European Patent Office / Office européen des brevets**

(11) **EP 4 232 884 B1**

(12) **FASCICULE DE BREVET EUROPEEN**

(45) Date de publication et mention de la délivrance du brevet:
**10.09.2025 Bulletin 2025/37**

(21) Numéro de dépôt: **21798682.7**

(22) Date de dépôt: **22.10.2021**

(51) Classification Internationale des Brevets (IPC):
**G06F 3/01** *(2006.01)*

(52) Classification Coopérative des Brevets (CPC):
**G06F 3/016**

(86) Numéro de dépôt international:
**PCT/EP2021/079407**

(87) Numéro de publication internationale:
**WO 2022/090091 (05.05.2022 Gazette 2022/18)**

(54) **INTERFACE TACTILE TRIDIMENSIONNELLE À RETOUR HAPTIQUE**

DREIDIMENSIONALE BERÜHRUNGSSCHNITTSTELLE MIT HAPTISCHER RÜCKMELDUNG

THREE-DIMENSIONAL TOUCH INTERFACE PROVIDING HAPTIC FEEDBACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2020 FR 2010956**

(43) Date de publication de la demande:
**30.08.2023 Bulletin 2023/35**

(73) Titulaire: **Hap2u**
**38400 Saint-Martin-d'Hères (FR)**

(72) Inventeurs:
• **GAILLARD, Maxime**
**38400 SAINT-MARTIN-D'HÈRES (FR)**
• **COTTIN-BIZONNE, Mickael**
**38400 SAINT-MARTIN-D'HÈRES (FR)**
• **RUPIN, Matthieu**
**38400 SAINT-MARTIN-D'HÈRES (FR)**

(74) Mandataire: **INNOV-GROUP**
**209 Avenue Berthelot**
**69007 Lyon (FR)**

(56) Documents cités:
**WO-A2-2017/072232 FR-A1- 3 072 478**
**JP-B1- 6 739 692**

**Description**

**DOMAINE TECHNIQUE**

L'invention est une interface tactile, à retour haptique, comportant un organe de contrôle tridimensionnel, l'organe de contrôle étant apte à être touché par un corps externe, par exemple un doigt d'un utilisateur ou un stylet manipulé par un utilisateur.

**ART ANTERIEUR**

Les interfaces classiques, destinées à des dispositifs, qu'il s'agisse de dispositifs industriels ou destinés au grand public, utilisent fréquemment des organes de commande de type boutons, par exemple des boutons poussoirs, des molettes de réglage ou des curseurs. Ce type d'organe permet de sélectionner et/ou des régler des paramètres de fonctionnement du dispositif contrôlé par l'interface. Les organes de commande sont généralement tridimensionnels, et s'étendent à partir d'une surface. L'ensemble forme une baie de commande. Les organes de commande peuvent prendre des formes diverses. Ils comprennent généralement des pièces mobiles, ainsi que des interconnexions électriques. Il en résulte un coût de fabrication élevé, et une usure après une certaine durée d'utilisation.

Une alternative à ce type d'interface est apparue avec le développement d'écrans tactiles, en particulier les écrans tactiles à effet capacitif. Ces derniers peuvent fonctionner de façon interactive, et très intuitive. Ils sont à présent utilisés à la fois pour des dispositifs usuels, par exemple les téléphones portables, ou les tableaux de bord d'automobiles, mais également dans des applications industrielles plus spécialisées. Cependant, un écran tactile est une surface, généralement plane, sans texturation.

Des dispositifs ont été développés, permettant de ressentir une sensation de texture lorsqu'un doigt d'un utilisateur est appliqué sur un écran plan. Les principes d'une telle texturation sont par exemple décrits dans la publication Biet M. et al., "Squeeze film effect for the design of an ultrasonic tactile plate", IEEE Transactions on Ultrasonic, Ferroelectrics and Frequency Control, IEEE, 2007, 54 (12), pp.2678 - 2688, ou encore dans la demande de brevet EP1956466, ainsi que dans la publication Vezzoli et al. « Couplage vibration ultrasonique et électro-vibration pour la stimulation tactile », Symposium de génie électrique SGE 2014. Dans cette dernière, on compare deux techniques de stimulation tactile dont celle par effet dit de vibration ultrasonique. Dans ces documents, on décrit une interface tactile comportant une plaque lisse, formant une surface de contact destinée à être touchée par un doigt. Cette plaque est mise en vibration par plusieurs transducteurs piézoélectriques, disposés au contact de la plaque, en dessous de cette dernière. Les transducteurs et la plaque forment un résonateur propice à la formation d'une onde de flexion stationnaire, de type onde de Lamb. Lorsque la fréquence de résonance de vibration de la surface de contact est dans le domaine ultrasonore, par exemple entre 10 kHz et 200 kHz, et que l'amplitude de la vibration est faible, typiquement de quelques microns, l'utilisateur peut ressentir un effet de texturation de la surface de contact, lorsque le doigt glisse le long de ladite surface. Cet effet est connu et est usuellement désigné par le terme "squeeze film" (ou film de surpression). La vibration de la plaque génère un coussin d'air entre le doigt et la plaque, diminuant le frottement du doigt sur la plaque. On parle également de lubrification ultrasonique. En modulant la vibration, le frottement du doigt sur la plaque est modifié. L'utilisateur peut ainsi percevoir une impression de texturation, prenant la forme d'une sensation de rugosité, ou une certaine résistance au glissement, alors que la surface de contact reste lisse. Cet effet a été appliqué à des surfaces de contact transparentes ou non, formant une interface haptique. Ce type d'interface peut être combiné avec un écran tactile.

Cependant, la présence d'organes de commande tridimensionnels dans une interface comporte certains avantages : une meilleure prise en main, un fonctionnement parfois considéré comme plus intuitif. Les organes tridimensionnels sont également appropriés à des utilisations dans lesquelles la visibilité de l'utilisateur est réduite, où lorsqu'il ne peut pas porter toute son attention sur l'interface. Par exemple, lorsque l'utilisateur est un conducteur d'une automobile, l'interface de commande des équipements de l'automobile doit être la plus intuitive possible, en réclamant le moins d'attention de la part du conducteur de telle sorte que ce dernier soit concentré sur la conduite.

Le document JP6739692 décrit une interface haptique dotée d'un bouton de commande tridimensionnel. Le bouton de commande tridimensionnel est mobile en rotation sur une plaque. Sous l'effet d'une rotation du bouton de commande, l'interface haptique exerce un retour haptique, consistant à moduler une friction entre la bouton de commande et la plaque. Cela permet à un utilisateur de percevoir une modulation du glissement du bouton de commande sur la plaque.

Les inventeurs ont conçu une interface d'un dispositif, combinant les avantages des écrans tactiles et des organes tridimensionnels classiques.

**EXPOSE DE L'INVENTION**

Un premier objet de l'invention est une interface tactile, destinée à commander un dispositif, l'interface étant destinée à être touchée par un corps externe, et comportant :

- une plaque;
- au moins un transducteur, configuré pour mettre la plaque en vibration, de préférence selon une fréquence de vibration ultrasonique ;

l'interface étant caractérisée en ce qu'elle comporte :

- un organe de contrôle, s'étendant à partir de la plaque, entre une extrémité proximale, appliquée contre la plaque, et une extrémité distale, située à distance de la plaque, l'organe de contrôle étant destiné à être en contact avec le corps externe ;
- un capteur, configuré pour émettre un signal d'état, le signal d'état étant représentatif d'un contact du corps externe sur l'organe de contrôle ;
- une unité de commande, reliée au capteur, et configurée pour adresser, en fonction du signal d'état, un signal d'activation à au moins un transducteur, de façon à mettre en vibration la plaque ainsi que l'organe de contrôle.

Ainsi, la vibration induit une impression de texturation, ressentie par le corps externe touchant soit la plaque soit l'organe de contrôle. La vibration constitue alors un retour haptique de l'interface, se traduisant par une modification d'une sensation tactile. De préférence, la vibration est une vibration ultrasonique. Par vibration ultrasonique, on entend une vibration dont la fréquence est supérieure ou égale à 20 kHz. La fréquence de vibration est de préférence inférieure à 200 kHz.

Le signal d'état peut être représentatif d'une pression exercée par le corps externe sur l'organe de contrôle et/ou d'une position du corps externe sur l'organe de contrôle.

L'unité de commande peut être configurée pour adresser un signal de commande au dispositif en fonction du signal d'état.

L'organe de contrôle peut être fixé contre la plaque. Il peut également être amovible.

Selon un premier mode de réalisation,

- le capteur comporte un capteur de pression, configuré pour mesurer une pression exercée, notamment sous l'effet du corps externe, par l'organe de contrôle, sur la plaque, le signal d'état comportant une composante de pression, dépendant de la pression exercée ;
- l'unité de commande est configurée pour adresser un signal d'activation au transducteur en fonction de la pression exercée, notamment lorsque la pression franchit un seuil prédéterminé ou en fonction d'une variation de pression.

Le capteur de pression peut comporter :

- un télémètre, disposé face à la plaque, et configuré pour mesurer une distance le séparant de la plaque, le télémètre étant configuré pour déterminer une déformation de la plaque sous l'effet d'une pression exercée sur la plaque ;
- ou une jauge de contrainte, agencée pour se déformer sous l'effet d'une déformation de la plaque sous l'effet d'une pression exercée sur la plaque ;

- ou un dynamomètre, disposé au contact de la plaque, et configuré pour détecter un déplacement de la plaque sous l'effet d'une pression exercée sur la plaque ;
- ou un transducteur, configuré pour mesurer une variation d'une vibration de la plaque, la variation résultant d'une pression exercée sur la plaque.

En fonction de la composante de pression mesurée par le capteur de pression, l'unité de commande peut être configurée pour adresser un signal d'activation prenant la forme d'une séquence d'activation. La séquence d'activation est paramétrée de telle sorte qu'un effet de clic soit ressenti par le corps externe, le clic formant un retour haptique de l'interface.

Le signal d'activation peut être établi à partir :

- d'une porteuse périodique, la porteuse s'étendant, à chaque période, selon une amplitude ;
- d'une fonction de modulation, variant en fonction de la composante de pression mesurée par le capteur de position ;

de sorte que l'amplitude du signal d'activation résulte d'une modulation de la porteuse par la fonction de modulation.

Selon un deuxième mode de réalisation :

- le capteur comporte un capteur de position capacitif, relié à un réseau de pistes conductrices s'étendant de préférence parallèlement à la plaque ;
- l'organe de contrôle est formé d'un matériau électriquement isolant, et comporte des éléments conducteurs, électriquement isolés les uns des autres, s'étendant entre l'extrémité proximale et l'extrémité distale;
- au moins une piste conductrice est disposée en contact capacitif avec au moins un élément conducteur de l'organe de contrôle, de façon à autoriser un transfert de charges, par effet capacitif, entre le corps externe, et la piste conductrice, par l'intermédiaire de l'élément conducteur;

de sorte que le signal d'état comporte une composante de position, dépendant d'une position du contact entre le corps externe et l'organe de contrôle.

L'unité de commande peut être configurée pour adresser le signal d'activation au transducteur lorsque la composante de position subit une variation représentative d'une variation de la position du contact entre le corps externe et l'organe de contrôle.

En fonction de la composante de position mesurée par le capteur de position, le signal d'activation peut être paramétré de façon qu'un effet de cran soit ressenti par le corps externe, l'effet de cran formant un retour haptique de l'interface. L'effet de cran correspond à un ressenti, par le corps externe, d'au moins un cran virtuel sur l'organe de contrôle. Le cran virtuel est un cran ressenti, résultant de la mise en vibration de la plaque par le signal d'activation.

Le signal d'activation peut être établi à partir :

- d'une porteuse périodique, la porteuse s'étendant, à chaque période, selon une amplitude ;
- d'une fonction de modulation, variant en fonction de la composante de position ;

de sorte que l'amplitude du signal d'activation résulte d'une modulation de la porteuse par la fonction de modulation.

La fonction de modulation peut comporter successivement :

- une phase antérieure, lorsque le corps externe approche d'un cran;
- une phase de cran, lorsque le corps externe franchit le cran ;
- une phase postérieure, lorsque le corps externe s'éloigne du cran ;

de sorte que le ressenti du cran virtuel par l'utilisateur dépend de la fonction de modulation durant les phases antérieure, de cran et postérieure.

La fonction de modulation peut être telle que lors de la phase de cran, la fonction de modulation varie selon une plage de variation plus étendue que lors de la phase antérieure et lors de la phase postérieure.

Les phases antérieure, de cran et postérieure forment une séquence d'activation associé au cran virtuel. Le signal d'activation peut comporter plusieurs séquences d'activation successives, chaque séquence d'activation correspondant à un cran virtuel.

Lors de la phase de cran, la fonction de modulation peut être telle qu'une valeur absolue de sa dérivée temporelle atteint une valeur maximale plus élevée que lors de la phase antérieure et lors de la phase postérieure.

Le retour haptique de l'interface peut être assimilé à une texture virtuelle, dans la mesure où il s'agit d'une texture ressentie, indépendamment de l'état de surface réelle de l'organe de contrôle.

Le premier mode de réalisation et le deuxième mode de réalisation peuvent être envisagés l'un indépendamment de l'autre ou en combinaison.

Selon une possibilité, l'organe de contrôle ne comporte pas de composant mobile par rapport à la plaque.

L'organe de contrôle présente de préférence une forme géométrique d'un bouton ou d'une molette de réglage ou d'un curseur.

La plaque est de préférence reliée à une pluralité de transducteurs. La plaque peut être rigide, transparente ou opaque. Selon une possibilité, l'interface comporte un écran. La plaque peut alors être transparente, et disposée contre ou parallèlement à l'écran.

Un deuxième objet de l'invention est un dispositif, apte à être contrôlé par un paramètre, et comportant une interface configurée pour sélectionner le paramètre ou régler une valeur du paramètre, le dispositif étant caractérisé en ce que l'interface est une interface selon le premier objet de l'invention, l'interface étant configurée pour déterminer la valeur du paramètre ou sélectionner le paramètre en fonction du signal d'état.

Un troisième objet de l'invention est un procédé de commande d'une interface selon le premier objet de l'invention, comportant :

a) application d'un corps externe sur l'organe de contrôle ;
b) formation, par le capteur, d'un signal d'état, représentatif d'une position du corps externe sur l'organe de contrôle et/ou d'une pression exercée par l'organe de contrôle sur la plaque, sous l'effet du corps externe ;
c) en fonction du signal d'état, émission, par l'unité de commande, d'un signal d'activation du transducteur ou de chaque transducteur;
d) sous l'effet du signal d'activation, mise en vibration de la plaque, de sorte qu'une vibration, de préférence ultrasonique, se propage à travers la plaque, de façon à induire un effet haptique sur le corps externe.

Ainsi, l'effet, sur le corps externe, de la vibration ultrasonique, constitue un retour haptique de l'interface.

L'interface peut être telle que décrite en lien avec le premier mode de réalisation du premier objet de l'invention. Le procédé peut alors être tel que :

- lors de l'étape a), le corps externe applique une pression sur l'organe de contrôle, en direction de la plaque ;
- lors de l'étape b), le signal d'état formé par le capteur est représentatif de la pression exercée par le corps externe sur l'organe de contrôle ;
- lors de l'étape c), l'unité de commande émet un signal d'activation en fonction de la pression et/ou d'une variation de la pression.

Le signal d'activation peut être tel que décrit en lien avec le premier mode de réalisation du premier objet de l'invention.

L'interface peut être telle que décrite en lien avec le deuxième mode de réalisation du premier objet de l'invention.

Le procédé peut alors être tel que :

- lors de l'étape a), le corps externe est électriquement conducteur et se déplace sur l'organe de contrôle, face à différents éléments conducteurs ;
- lors de l'étape b), le signal d'état formé par le capteur est représentatif d'une variation de la position du corps externe sur l'organe de contrôle ;
- lors de l'étape c), l'unité de commande émet un signal d'activation en fonction de la variation de la position du corps externe.

Le signal d'activation peut être tel que décrit en lien avec le deuxième mode de réalisation du premier objet de l'invention. Le signal d'activation peut prendre la forme d'une séquence d'activation, ou de plusieurs séquences d'activation successives. La séquence d'activation, ou chaque séquence d'activation, peut être paramétrée de telle sorte qu'un effet de cran soit ressenti par le corps externe, l'effet de cran formant un retour haptique de l'interface.

Le procédé peut également être tel que :

- lors de l'étape a), le corps externe est électriquement conducteur et l'organe de contrôle est susceptible d'être contacté, simultanément, en différents points de contact, respectivement sur différents éléments conducteurs;
- lors de l'étape b), le signal d'état formé par le capteur est représentatif d'un nombre de points de contact ;
- lors de l'étape c), l'unité de commande émet un signal d'activation en fonction d'une variation du nombre de points de contact.

Le procédé peut comporter une étape e) selon laquelle l'unité de commande adresse un signal de commande, vers le dispositif, en fonction du signal d'état formé par le capteur.

Le corps externe peut être un doigt d'un utilisateur.

L'invention sera mieux comprise à la lecture de l'exposé des exemples de réalisation présentés, dans la suite de la description, en lien avec les figures listées ci-dessous.

## FIGURES

Les figures 1A et 1B montrent un exemple d'une interface tactile dont l'aspect est similaire à une molette de réglage.

La figure 1C schématise une propagation d'une vibration ultrasonique à travers l'interface décrite en lien avec les figures 1A et 1B.

La figure 1D illustre une séquence temporelle d'activation de transducteurs, engendrant une vibration de la plaque de façon à induire un effet de clic.

La figure 1E schématise un déplacement d'un doigt le long d'un organe de contrôle. Au cours du déplacement, sous l'effet d'une vibration de la plaque, le doigt ressent une présence de crans virtuels à la surface de l'organe de contrôle.

Les figures 1F, 1G et 1H illustrent respectivement une fonction de modulation, une porteuse et un signal d'activation de la plaque résultant d'une modulation d'amplitude de la porteuse par la fonction de modulation. Le signal d'activation permet un ressenti de crans virtuels représentés sur la figure 1E.

La figure 1I montre un autre signal d'activation permettant un ressenti des crans virtuels représentés sur la figure 1E.

Les figures 2A à 2E représentent différentes configurations de l'interface, cette dernière comportant des caractéristiques décrites en lien avec les figures 1A à 1I.

[Fig. 3A] La figure 3A illustre un signal d'activation pour former une vibration ultrasonique se propageant à travers l'interface, sous l'effet d'un glissement d'un corps externe, par exemple un doigt, le long de l'organe de contrôle.

Les figures 3B et 3C illustrent un signal d'activation pour former une vibration ultrasonique se propageant à travers l'interface, sous l'effet d'une pression exercée par un corps externe, par exemple un doigt, sur de l'organe de contrôle, vers la plaque.

La figure 4A illustre un mode de réalisation selon lequel un signal d'activation, permettant la génération d'une vibration ultrasonique, est activé en fonction d'une variation d'un nombre de points de contact sur l'organe de contrôle.

Les figures 4B et 4C montrent un organe de contrôle de forme respectivement parallélépipédique et tronconique.

La figure 4D montre une forme géométrique particulière possible de l'organe de contrôle.

Les figures 5A à 5D schématisent les principales étapes de différents exemples d'utilisation.

## EXPOSE DE MODES DE REALISATION PARTICULIERS

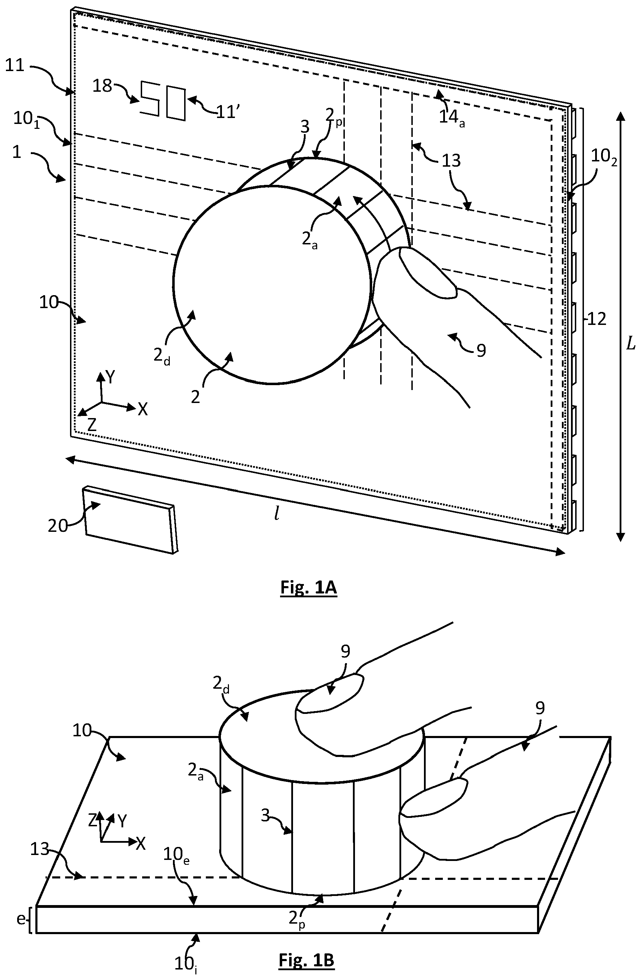

Les figures 1A et 1B représentent un premier exemple d'interface tactile 1 selon l'invention. L'interface tactile est destinée à être actionnée par un corps externe 9 de façon à piloter un dispositif 20. Ce dernier peut être un processeur d'un équipement électroménager, ou d'un équipement d'une automobile, ou de tout autre équipement à usage grand-public ou professionnel. Le dispositif 20 est relié à l'interface par une liaison filaire ou sans fil.

Dans les exemples représentés dans cette demande, le corps externe 9 est un doigt, ce qui correspond à la plupart des applications envisagées. De façon alternative, le corps externe 9 peut être un stylet, ou tout autre moyen permettant d'agir sur l'interface 1. Le terme interface tactile désigne une interface configurée pour être touchée par un tel corps externe 9.

L'interface tactile comporte une plaque 10, rigide pouvant être mise en vibration. La plaque 10 s'étend entre une face externe $10_e$ et une face interne $10_i$. La face externe $10_e$ est accessible au doigt 9. La face interne $10_i$ et la face externe $10_e$ s'étendent de préférence l'une parallèlement à l'autre. La distance entre la face externe $10_e$ et la face interne $10_i$ définit une épaisseur e de la plaque. L'épaisseur e de la plaque est dimensionnée pour permettre une vibration de la plaque 10 selon une vibration ultrasonique, comme décrit ci-après. L'épaisseur e de la plaque 10 est de préférence inférieure à 10 mm, voire inférieure à 5 mm. L'épaisseur e est ajustée en fonction de la nature du matériau et de ses propriétés mécaniques (rigidité, solidité). Elle est par exemple comprise entre 1 et 5 mm pour du verre ou un matériau tel que le plexiglas.

Dans l'exemple représenté, la face interne $10_i$ et la face externe $10_e$ sont planes, ce qui correspond à la configuration la plus simple à fabriquer. La plaque s'étend, parallèlement à un axe latéral X, selon une largeur $l$ et, parallèlement à un axe longitudinal Y, selon une longueur $L$. La longueur $L$ et la largeur $l$ peuvent être comprises entre 5 cm et quelques dizaines de cm, par exemple 30 cm, voire davantage. L'axe latéral X et l'axe longitudinal Y définissent un plan principal $P_{XY}$. Dans d'autres exemples, la face interne $10_i$ et/ou la face externe $10_e$ peut être incurvée.

La plaque 10 est formée d'un matériau rigide, tel que le verre, ou un polymère, ou du bois, ou un métal, ou un semi-conducteur, par exemple le silicium. La plaque 10 peut être transparente ou opaque. La plaque 10 peut comporter des parties opaques et des parties transparentes. La plaque peut comporter plusieurs couches superposées les unes aux autres.

Dans cet exemple, la plaque 10 est délimitée, selon l'axe latéral X, par une première bordure latérale $10_1$ et une deuxième bordure latérale $10_2$ au voisinage desquelles sont disposés des transducteurs 12. Par au voisinage, on entend à une distance de préférence inférieure à 2 cm, sur ou sous la plaque 10. Chaque transducteur 12 est apte à être activé par un signal d'activation électrique, et, sous l'effet du signal d'activation, à exercer une pression sur la plaque 10 de manière à produire une déformation locale de la plaque, selon une direction perpendiculaire à la plaque. Lorsque le signal d'activation est périodique, à une fréquence ultrasonique, la déformation de la plaque 10 est périodique, ce qui entraîne une formation d'une vibration ultrasonique 19 se propageant à travers la plaque. La vibration peut notamment être engendrée par une onde de flexion se propageant à travers la plaque. L'onde de flexion peut être stationnaire ou progressive. Aussi, le signal d'activation de chaque transducteur peut être modulé dans le temps et/ou modulé en amplitude. De préférence, la plaque est reliée à une pluralité de transducteurs 12. Les transducteurs sont généralement disposés au voisinage d'au moins une bordure de la plaque 10, et de préférence au voisinage de deux bordures opposées par rapport à l'axe latéral X et/ou à l'axe latéral Y. La disposition des transducteurs 12 en bordure de la plaque 10 ne constitue pas une condition nécessaire : les transducteurs peuvent être disposés selon d'autres configurations, par exemple sous la forme d'une ligne, au milieu de la plaque, ou d'une matrice.

Chaque transducteur 12 peut être un transducteur de type piézoélectrique, comportant un matériau piézoélectrique, par exemple AIN, ZnO ou PZT, disposé entre deux électrodes. Par exemple, chaque transducteur 12 peut être la référence PZT 406. De façon alternative, chaque transducteur peut être un résonateur électromécanique, par exemple de type MEMS (Micro ElectroMechanical System - microrésonateur électromécanique), ou de type électrostrictif ou magnétostrictif. Les transducteurs 12 peuvent être tels que le matériau piézoélectrique est déposé, sous une forme d'une ou plusieurs couches minces, au contact d'électrodes de polarisation.

Chaque transducteur 12 peut être assemblé contre la face interne $10_i$ de la plaque 10 par collage. Les transducteurs sont mécaniquement reliés à la face interne $10_i$: Ils peuvent être directement assemblés à la face interne, ou être assemblé à un composant intermédiaire, de préférence rigide, ce dernier étant assemblé à la face interne $10_i$, de manière à permettre une transmission, à la plaque, de la vibration induite par le ou chaque transducteur.

Le composant intermédiaire peut être métallique. Il peut par exemple s'agir d'une pièce formant un amplificateur, disposé entre la plaque et un transducteur 12 (ou chaque transducteur 12), et agencé pour amplifier la vibration produite par le transducteur 12 (ou chaque transducteur 12) et transmise à la plaque 10. Le composant intermédiaire peut former une couche rigide, de façon à augmenter la rigidité de la plaque. Le composant intermédiaire peut être un écran 11, assemblé à la plaque 10, comme décrit par la suite. La plaque 10 peut former une dalle de protection de l'écran 11. L'écran 11 peut être un écran de type de type LCD (Liquid Cristal Display - écran à cristaux liquides) ou OLED (Organic Light-Emitting Diode - Diode électroluminescente organique). Le composant intermédiaire peut être un composant multicouches. Il peut par exemple comporter un écran, sous lequel est placé une pièce formant un amplificateur, les transducteurs étant assemblés à l'amplificateur.

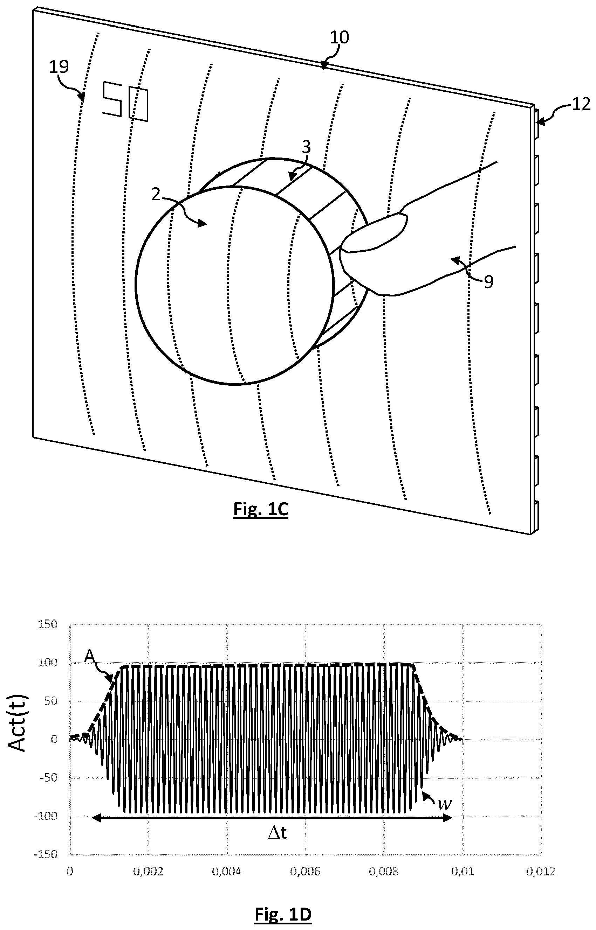

D'une façon générale, chaque transducteur 12 est configuré pour générer une vibration ultrasonique 19, cette dernière se propageant dans la plaque 10. La fréquence de la vibration ultrasonique 19 est de préférence comprise entre 10 kHz et 200 KHz. Elle est de préférence supérieure à 20 KHz, de manière à adresser la bande spectrale ultrasonore et de préférence inférieure à 150 kHz. L'amplitude de la vibration ultrasonique 19 est généralement comprise entre 0.1 $\mu$m et 50 $\mu$m. On a schématisé, sur la figure 1C, une vibration ultrasonique 19 se propageant dans la plaque 10. De façon connue dans le domaine des interfaces à retour haptique, la vibration de la plaque entraîne une formation d'un film mince d'air entre la plaque 10 et le doigt 9, (dit « effet squeeze film » en terminologie anglo-saxonne) ce qui entraîne une modification de la surface de contact entre le doigt et la plaque. En modulant l'amplitude de la vibration de la plaque, l'épaisseur du film d'air varie. Cela modifie le frottement entre la plaque et le doigt, comme décrit dans l'art antérieur, ce qui entraine une impression de texturation de la plaque lorsque le doigt de l'utilisateur se déplace sur la face externe $10_e$. La vibration ultrasonique 19 peut être stationnaire, mais cela n'est pas nécessaire.

Les inventeurs ont disposé un organe de contrôle 2, rigide, et de forme tridimensionnelle, sur la plaque 10, et plus précisément sur la face externe $10_e$ de la plaque. Ils ont constaté qu'une vibration ultrasonique 19, se propageant dans la plaque 10, peut se propager également dans l'organe de contrôle 2, notamment lorsqu'on parvient à préserver le déplacement vertical de la plaque, sans amortissement significatif. La vibration ultrasonique 19 peut alors être ressentie indirectement par le doigt 9, lorsque ce dernier touche l'organe de contrôle 2. Il s'agit d'un élément important de l'invention, selon lequel un effet haptique peut être ressenti non seulement au contact de la plaque 10, mais également au contact d'un organe de contrôle 2, de préférence rigide, et relié à la plaque 10. Le fait que la fréquence de vibration soit ultrasonique rend la vibration imperceptible, sauf par le corps externe 9 se déplaçant sur la face externe de la plaque ou sur l'organe de contrôle 2.

L'organe de contrôle 2 peut être fixé sur la plaque 10. Il peut également être posé temporairement sur la plaque 10, en étant amovible. Dans tous les cas l'organe de contrôle reste fixe pendant son fonctionnement, c'est à dire pendant son actionnement par un corps externe.

L'organe de contrôle 2 peut prendre la forme d'un organe de commande usuel, tel que décrit dans l'art antérieur : molette de réglage, bouton ou curseur. Cependant, contrairement aux organes de commande standards, l'organe de contrôle 2 peut être un élément simple, inerte, sans partie mobile ou électronique. Il peut par exemple être obtenu par un procédé de fabrication simple, par exemple un moulage.

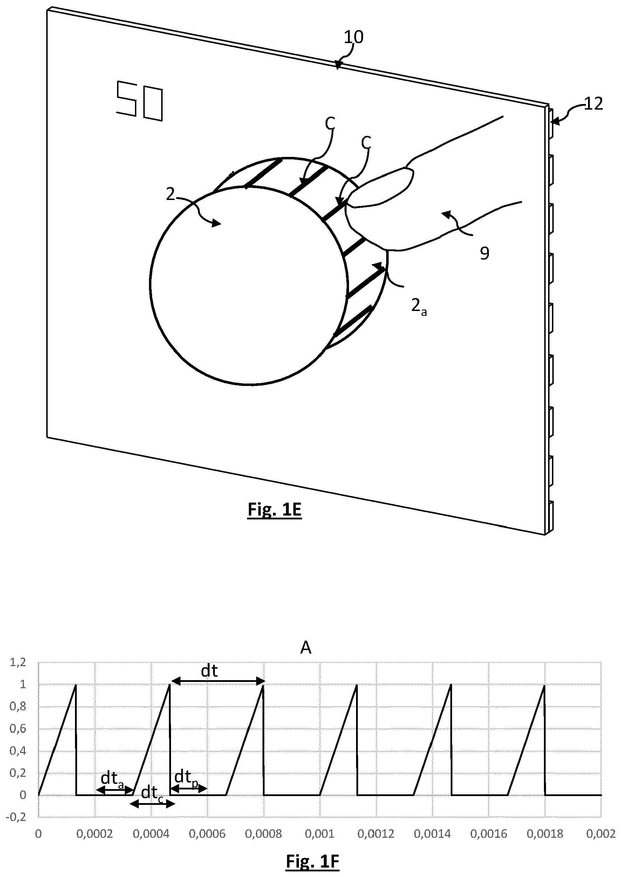

D'une façon générale, l'organe de contrôle 2 s'étend entre une extrémité proximale $2_p$, au contact de la plaque 10, et une extrémité distale $2_d$, située à une distance d'extension de la plaque. La distance d'extension correspond à une distance, selon un axe transversal Z, perpendiculaire à la plaque 10, entre la plaque et l'extrémité distale $2_d$. Elle est typiquement égale à quelques millimètres ou centimètres. L'organe de contrôle 2 comporte une face latérale $2_a$, reliant l'extrémité proximale $2_p$ à l'extrémité distale $2_d$. Le doigt 9 peut contacter l'organe de contrôle 2 soit au niveau de l'extrémité distale $2_d$ (cf. figure 1B) soit au niveau de la face latérale $2_a$ (cf. figures 1A, 1B, 1C et 1E).

Le doigt 9 peut également contacter l'organe de contrôle sur ses arêtes (par exemple à la jonction de la face latérale $2_a$ et de l'extrémité proximale $2_p$), ou sur une face interne lorsque l'organe de contrôle est évidé, par exemple dans le cas d'un anneau. Dans l'exemple représenté sur la figure 1A, l'extrémité distale $2_d$ est surfacique, et s'étend selon une surface plane parallèlement à la face externe $10_e$ de la plaque 10. L'extrémité distale $2_d$ peut constituer une surface d'appui de l'organe de contrôle 2.

Le fait que l'organe de contrôle 2 s'étende en trois dimensions améliore la préhension de ce dernier par un ou plusieurs doigts 9. Un doigt 9 peut glisser aisément le long de la surface latérale $2_a$, ou appuyer sur l'extrémité distale $2_d$ en direction de la plaque 10. La surface tridimensionnelle de l'organe de contrôle 2 permet également d'augmenter une surface de contact de l'interface. On comprend que l'organe de contrôle tridimensionnel 2 permet d'obtenir une interface 1 dont l'ergonomie est améliorée par rapport à une interface plane.

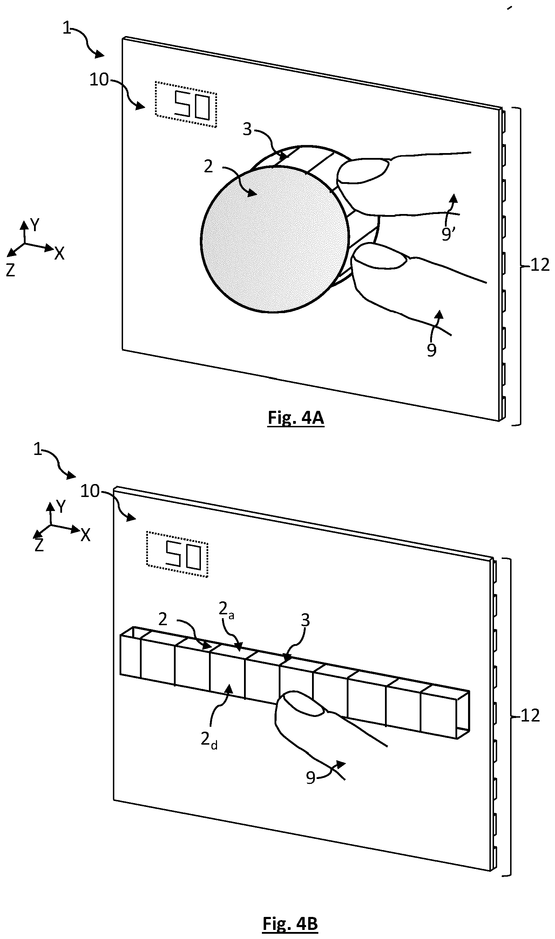

Dans l'exemple représenté sur les figures 1A à 1C et 1E, l'organe de contrôle 2 a une forme cylindrique, similaire à la forme d'une molette. Selon d'autres configurations, l'organe de contrôle peut présenter d'autres formes, par exemple un parallélépipède, un cône, une forme tronconique, ou hémisphérique. Des exemples de formes parallélépipédique ou tronconique sont commentées par la suite, en lien avec les figures 4B à 4D. L'organe de contrôle 2 est rigide. Il peut être assemblé à la face externe $10_e$ de la plaque 10 par collage.

L'interface 1 comporte un capteur 14, permettant de former un signal S(t), dit signal d'état, dépendant d'un état du contact entre le doigt 9 et l'organe de contrôle 2, à un instant t. Par état du contact, on entend :

- une position du contact sur l'organe de contrôle 2, et/ou une variation de ladite position ;
- et/ou une pression exercée par le doigt 9 sur la plaque 10, par l'intermédiaire de l'organe de contrôle 2, et/ou une variation de ladite pression.

Le capteur 14 peut comporter un capteur de position $14_a$. La fonction du capteur de position $14_a$ est une détermination d'une position d'un contact du doigt 9, parallèlement à la face externe $10_e$. Dans l'exemple représenté sur les figures 1A et 1B, la plaque 10 est formée d'un matériau diélectrique, et le capteur de position $14_a$ est un capteur de type capacitif. Il est relié à des pistes conductrices 13, agencées selon un réseau bidimensionnel. Les pistes conductrices 13 sont adjacentes de la face interne $10_i$. Les pistes conductrices s'étendent parallèlement à la plaque 10, en dessous de la face externe $10_e$. Dans l'exemple représenté, les pistes conductrices sont formées sur un écran capacitif 11, et disposées de façon adjacente de la face interne $10_i$.

Lorsque la plaque 10 est opaque, les pistes conductrices 13 peuvent être réalisées selon un matériau conducteur usuel, par exemple un métal. Lorsque la plaque 10 est transparente, les pistes conductrices 13 sont de préférence réalisées selon un matériau conducteur transparent, par exemple un oxyde conducteur, un matériau usuel étant l'ITO (Indium Tin Oxide - Oxyde d'indium-étain). Le réseau formé par les pistes conductrices 13 peut être matriciel, les pistes étant rectilignes, et s'étendant selon des lignes et des colonnes. Les pistes conductrices peuvent être polarisées selon une tension de polarisation.

Les pistes conductrices 13 peuvent être formées directement sur la plaque 10 ou dans la plaque 10.

L'organe de contrôle 2 peut comporter ou être formé par un matériau diélectrique, par exemple un plastique. Il peut comporter des éléments conducteurs 3, par exemple métalliques, et de préférence rectilignes, s'étendant à partir de l'extrémité proximale $2_p$, vers l'extrémité distale $2_d$, le long de la surface latérale $2_a$. Les différents éléments conducteurs 3 sont électriquement isolés les uns des autres. Un tel organe de contrôle 2 peut être structuré comme décrit dans la demande de brevet FR1907542 déposée le 05/07/2019. Au niveau de l'extrémité proximale $2_p$, chaque élément conducteur 3 est agencé pour être disposé en regard une piste conductrice 13, en étant séparée de cette dernière par une faible épaisseur de matériau diélectrique formé par la plaque. Un couplage capacitif peut alors s'établir entre la piste conductrice 13 et l'élément conducteur 3.

Le doigt 9 étant électriquement conducteur, sous l'effet d'une proximité avec un élément conducteur 3, un transfert de charges peut être effectué, par effet capacitif, entre une ou plusieurs pistes conductrices 13 et le doigt 9, par l'intermédiaire du couplage capacitif s'opérant entre l'élément conducteur 3 et la ou les pistes conductrices 13. Le doigt 9 peut être en contact électrique direct avec un élément conducteur 3. Il peut également être en couplage capacitif avec un élément conducteur 3, par exemple lorsque l'élément conducteur 3 est recouvert d'une fine couche diélectrique, par exemple un vernis. Il est à noter qu'une détection par couplage capacitif suppose que l'organe de contrôle 2 soit touché par un corps 9 électriquement conducteur : doigt ou stylet conducteur, par exemple métallique.

Sur les figures 1A et 1B, les pistes conductrices 13 sont représentés par des tirets car elles se situent derrière la plaque 10.

Les pistes conductrices 13 sont reliées au capteur de position $14_a$. Ce dernier est configuré pour estimer une position, parallèlement à la plaque 10, d'un point de contact capacitif entre le doigt 9 et les pistes conductrices 13. Du fait de l'agencement bidimensionnel des pistes conductrices 13, le capteur de position $14_a$ permet d'obtenir des coordonnées bidimensionnelles (*x*, *y*) du point de contact, parallèlement à la plaque 10. Le capteur de position $14_a$ permet également d'estimer une variation du point de contact, cette dernière étant détectée :

- lors d'un déplacement du doigt 9 par rapport à l'organe de contrôle 2 : il s'agit alors d'une variation spatiale de la position du point de contact ;
- lors de l'application ou du retrait d'un doigt 9 sur l'organe de contrôle 2 : il s'agit alors d'une variation temporelle de la position du point de contact.

De façon connue dans le domaine de la détection capacitive, les pistes conductrices 13 et les éléments conducteurs 3 définissent avantageusement un maillage tel que la présence d'un doigt 9 est détectée simultanément par plusieurs pistes conductrices 13. Le doigt est ainsi placé en contact ou en couplage capacitif avec au moins deux éléments conducteurs 3 adjacents. Cela permet d'obtenir une détermination de la position du doigt, parallèlement à la plaque 10, selon une résolution spatiale élevée.

Sur la figure 1A, on a représenté une partie 11' d'un écran 11, situé contre la face interne $10_i$ de la plaque 10. Dans cet exemple, l'écran 11 permet d'effectuer un affichage, sur la partie 11', d'un paramètre 18 dont la valeur est ajustée par le doigt 9 agissant sur l'organe de contrôle 2, comme décrit par la suite.

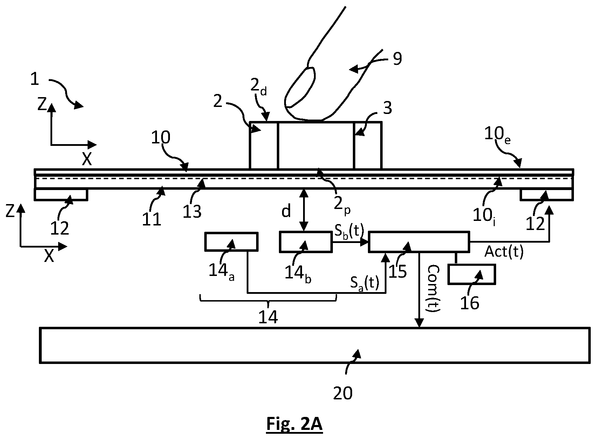

La figure 2A représente une vue, selon un plan $P_{XZ}$, des principaux éléments composant l'interface 1. Dans l'exemple représenté sur la figure 2A, le capteur 14 comporte, en plus du capteur de position $14_a$, un capteur de pression $14_b$. Le capteur de pression $14_b$ est configuré pour mesurer une pression s'exerçant sur le plaque 10, et entraînant une déformation de cette dernière. Dans l'exemple représenté sur la figure 2A, on a représenté un doigt 9 appuyant sur l'organe de contrôle 2, vers la plaque 10. La pression exercée par le doigt 9 est transmise, par l'organe de contrôle 2, à la plaque 10. Sous l'effet de la pression, la plaque 10 subit une déformation, et s'incurve vers le capteur de pression $14_b$. Dans l'exemple représenté sur la figure 2A, l'écran capacitif 11 est plaqué contre la face interne $10_i$ de la plaque 10. Sous l'effet de la pression exercée sur la plaque 10, l'ensemble formé par la plaque 10 et l'écran 11 se déforme.

Le capteur de pression $14_b$ peut comprendre un télémètre, configuré pour mesurer une variation de distance le séparant de la plaque 10. La plage de détection du télémètre est alors adaptée à des faibles distances, et à des faibles variations de distances. Il peut par exemple s'agir d'un télémètre optique infra-rouge, dont la plage de fonctionnement est comprise entre 1 et 5 mm, et disposé à 2.5 mm de la plaque. Un tel télémètre est usuellement désigné « reflective object sensor », signifiant « capteur d'objet par réflexion ». Par exemple, le capteur de référence QRE 1113 convient à une telle application.

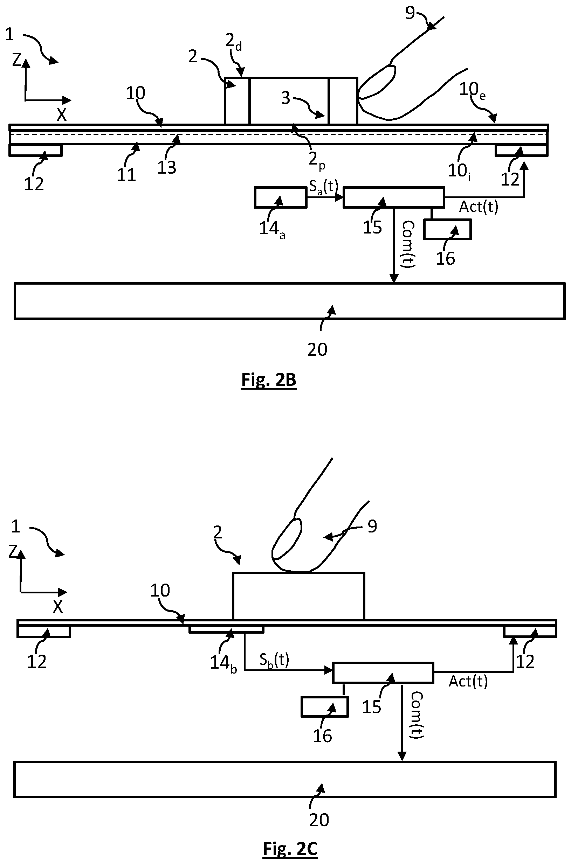

Sur la figure 2B, l'interface comporte un capteur de position $14_b$ mais pas de capteur de pression $14_b$.

De façon alternative à un télémètre, le capteur de pression $14_b$ peut être une jauge de contrainte, disposée au contact de la plaque 10, ou de l'ensemble formé par la plaque 10 et l'écran 11. La jauge de contrainte permet de quantifier la déformation de la plaque. La figure 2C montre une telle configuration. On note que dans la configuration représentée sur la figure 2C, le capteur 14 ne comporte pas de capteur de position $14_a$.

Une autre alternative est le recours à un capteur dynamométrique, placé au contact de la plaque 10, et permettant une mesure de la pression appliquée par la plaque. Cependant, pour des raisons de simplicité de conception, le recours à un capteur de type télémètre est préféré. Cela permet d'effectuer une mesure sans contact de la déformation subie par la plaque 10.

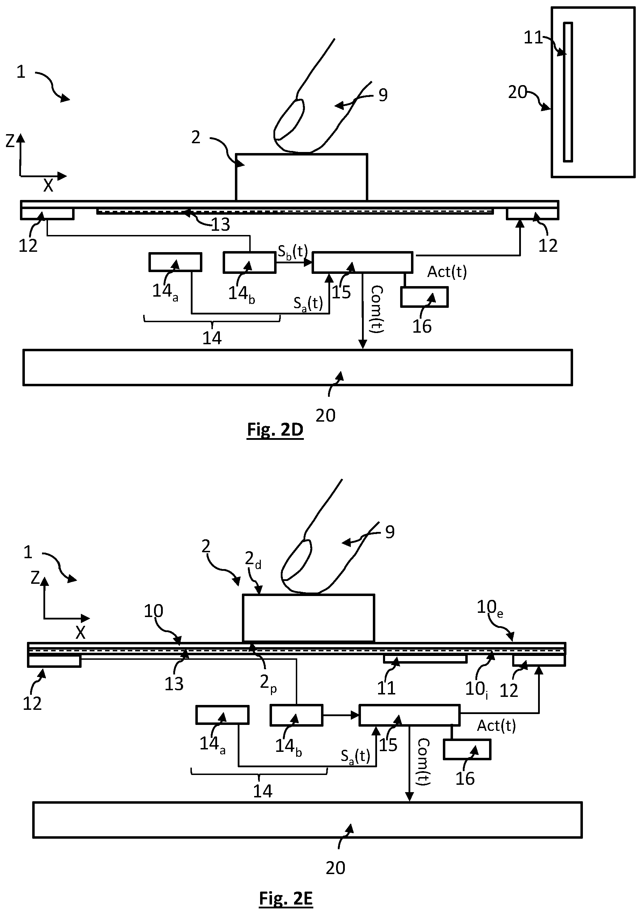

Selon une autre alternative, le capteur de pression $14_b$ est tel que décrit dans la demande de brevet EP3566115. Le capteur de pression $14_b$ agit alors que la plaque 10 est mise en vibration par au moins un transducteur piézoélectrique 12. La pression exercée sur la plaque 10 est estimée en mesurant une variation d'une amplitude de vibration sous l'effet de ladite pression. La mesure de la variation de l'amplitude de vibration peut être effectuée par un ou plusieurs transducteurs 12. A partir des mesures de variation résultant des transducteurs 12, le capteur de pression $14_b$ détermine la pression appliquée sur la plaque 10. Dans une telle configuration, le capteur de pression $14_b$ est relié à des transducteurs 12, comme représenté sur les figures 2D et 2E.

L'interface comporte également une unité de commande 15, reliée au capteur 14, ce dernier comportant le capteur de position $14_a$ et/ou le capteur de pression $14_b$. Le capteur 14 adresse un signal d'état S(t) à l'unité de commande 15. Le signal d'état comporte :

- une composante de position $S_a(t)$, issue du capteur de position $14_a$, représentative d'une position du doigt, ou de plusieurs doigts, sur l'organe de contrôle 2 ;
- et/ou une composante de pression $S_b(t)$, issue du capteur de pression $14_b$, représentative d'une pression exercée par le doigt, sur l'organe de contrôle 2, vers la plaque 10.

Le signal d'état S(t) est mis à jour à chaque instant t, selon une fréquence de mesure pouvant par exemple être comprise entre quelques dizaines de Hz et quelques centaines de kHz.

L'unité de commande 15 comporte un microcontrôleur ou un microprocesseur. L'unité de commande 15 est paramétrée ou programmée pour effectuer les actions décrites par la suite. En fonction du signal d'état S(t) transmis par le capteur 14, l'unité de commande 15 peut adresser un signal de commande Com(t) au dispositif 20. Par exemple, lorsque l'interface 1 est utilisée pour définir une valeur d'un paramètre de fonctionnement 18 du dispositif 20, l'unité de commande 15 est configurée pour transmettre la valeur du paramètre audit dispositif.

Un aspect important de l'invention est que l'unité de commande 15 est configurée pour adresser un signal d'activation Act(t) à au moins un transducteur 12, et de préférence à chaque transducteur 12, en fonction du signal d'état S(t). L'objectif recherché est d'obtenir un retour haptique de l'interface 1, adressé à l'utilisateur. Sous l'effet du signal d'activation, chaque transducteur activé génère une vibration ultrasonique 19, se propageant à travers la plaque 10 et à travers l'organe de contrôle 2, jusqu'au doigt 9 de l'utilisateur, comme représenté sur la figure 1C.

La figure 1D illustre une modulation de l'amplitude de la vibration ultrasonique 19 en fonction du temps, sous l'effet de l'activation des transducteurs piézoélectriques. La figure 1D correspond à une génération d'un effet de clic. Par effet de clic, on entend un effet par lequel le doigt, au contact de l'organe de contrôle 2, perçoit une sensation haptique de clic, assimilable à un clic effectué en agissant sur un bouton de commande classique, par exemple en l'enfonçant ou en le relâchant. Cet effet peut être obtenu en soumettant tout ou partie des transducteurs 12 à une séquence d'activation telle que représentée sur la figure 1D. Par séquence d'activation, il est entendu une génération du signal d'activation Act(t) durant une durée temporelle Δt, permettant une mise en vibration de la plaque 10. Dans cet exemple, la séquence d'activation s'étend selon une durée Δt = 10 ms. Selon d'autres exemples, elle peut durer entre quelques ms, par exemple 5 ms, et quelques centaines de ms. L'activation des transducteurs 12 entraîne une vibration ultrasonique de la plaque 10 selon une amplitude pouvant être par exemple égale à 2 $\mu$m crête à crête. Sur la figure 1D, l'axe des abscisses correspond au temps (unité en secondes) tandis que l'axe des ordonnées correspond à l'amplitude du signal d'activation Act(t) adressé aux transducteurs 12. L'unité de l'axe des ordonnées de la figure 1D est le picomètre: cela représente l'amplitude de la déformation de la plaque. Une séquence d'activation correspondant à un clic peut être paramétrée par la durée Δt, ainsi que l'amplitude ou la fréquence du signal d'activation. En faisant varier l'un de ces paramètres, l'effet de clic ressenti peut varier. Ainsi, l'unité de commande 15 peut générer différentes séquences d'activation, chaque séquence d'activation correspondant à un ressenti de clic particulier. Selon une variante, l'effet de clic peut être produit comme décrit dans la demande de brevet FR1909660 déposée le 3 septembre 2019. La où les séquences d'activation peuvent être enregistrées dans une mémoire 16 reliée à l'unité de commande 15.

Dans la séquence d'activation représentée sur la figure 1D, le signal d'activation Act(t) est formé par un signal dit de « porteuse » w périodique, modulé en amplitude. La période du signal de porteuse w correspond de préférence à une fréquence ultrasonique, c'est-à-dire comprise entre 20 kHz et 200 kHz. Dans cet exemple, la porteuse w est sinusoïdale. Le signal d'activation est formé par une modulation d'amplitude de la porteuse, par une fonction de modulation A. Dans l'exemple représenté sur la figure 1D, la fonction de modulation A est d'abord croissante, puis constante, puis décroissante. Le signal d'activation est tel que :

$$Act(t) = A(t) \times w(t) \ (1)$$

Durant la modulation de la porteuse, la fonction de modulation A prend une forme temporelle prédéterminée : il peut s'agir d'une simple fonction porte, ou trapézoïdale, ou gaussienne, ou triangulaire ou d'autre type de fonction périodique.

Selon un autre mode de réalisation, le doigt 9 perçoit un effet de crans lorsqu'il glisse le long de l'organe de contrôle 2. Sur la figure 1E, on a représenté des crans virtuels C le long de la surface latérale $2_a$ de l'organe de contrôle 2. Les crans C sont virtuels : ils ne correspondent pas à une texturation réelle ou un état de surface de l'organe de contrôle 2. Il s'agit de crans ressentis par le doigt glissant le long de la surface $2_a$, sous l'effet d'une vibration de la plaque et de l'organe de contrôle. Par exemple, la surface de l'organe de contrôle est lisse et le doigt, glissant sur l'organe de contrôle, perçoit une texturation virtuelle correspondant à des crans espacés les uns des autres. Par effet de crans, on entend un effet par lequel le doigt, lorsqu'il glisse le long de l'organe de contrôle 2, ressent une sensation haptique de crans, assimilable à un passage de crans mécaniques que l'on perçoit en tournant une molette de réglage. Autrement dit, il s'agit de mimer une sensation de crans que le doigt percevrait s'il agissait sur un curseur mécanique cranté. Cela se traduit par une variation, quasi instantanée, de la vitesse du doigt lorsqu'il se déplace sur chaque cran. La variation de la vitesse du doigt correspond à une accélération ou une décélération. La variation de vitesse est induite par une variation de la friction du doigt glissant le long de l'interface. La variation de friction est obtenue en mettant la plaque en vibration, comme détaillé ci-après.

De façon analogue à l'effet de clic, le signal d'activation est obtenu par une modulation d'amplitude d'une porteuse périodique $w$. La modulation d'amplitude est effectuée par une fonction de modulation d'amplitude. A la différence d'une séquence d'activation correspondant à un clic, la fonction de modulation d'amplitude est périodique lorsque l'on souhaite obtenir un ressenti de plusieurs crans successifs.

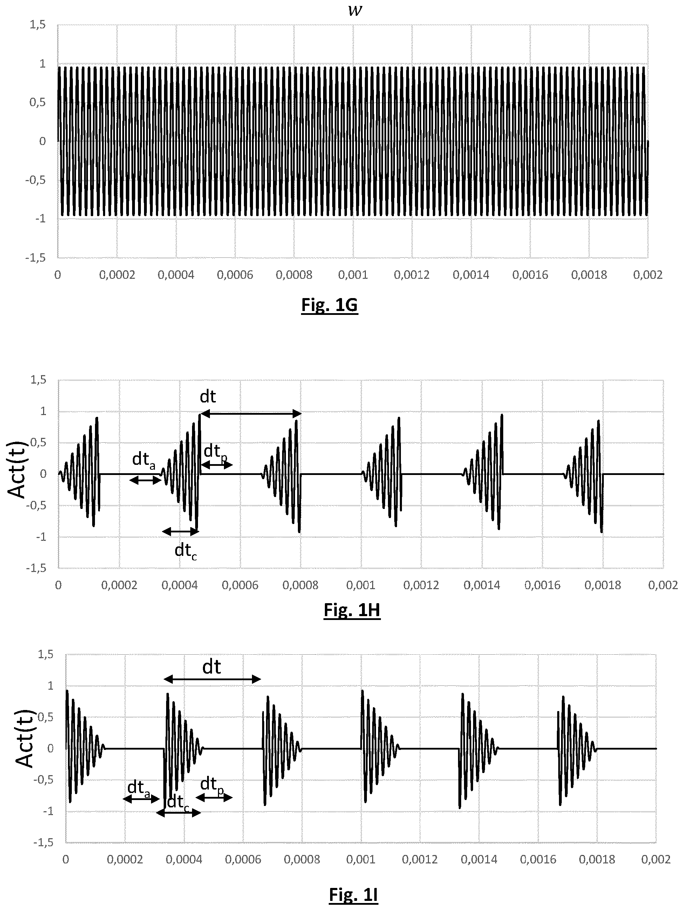

Selon une première possibilité, représentée sur les figures 1F à 1H, la fonction de modulation $A$ est triangulaire croissante. Les figures 1F, 1G et 1H représentent respectivement une fonction de modulation $A$, une porteuse sinusoïdale $w$, et le signal d'activation Act résultant d'une modulation d'amplitude de porteuse sinusoïdale par la fonction de modulation, selon l'expression (1).

Sur chacune de ces figures, l'axe des abscisses correspond au temps t (unité : seconde) et l'axe des ordonnées correspond à l'amplitude.

On observe que la forme temporelle de la fonction de modulation $A$ comporte, pour chaque cran :

- une phase temporelle antérieure $dt_a$, survenant lorsque le doigt s'approche du cran ;
- une phase temporelle de cran $dt_c$, survenant lorsque le doigt franchit le cran ;
- une phase temporelle postérieure $dt_p$, survenant lorsque le doigt s'éloigne du cran.

Les phases temporelles antérieure, de cran et postérieure sont activées successivement. Elles définissent une séquence d'activation associée au cran. Ainsi, pour chaque cran, le signal d'activation forme une séquence d'activation, correspondant à la succession phase antérieure, phase de cran, phase postérieure. La durée d'une séquence d'activation correspond à la somme des durées respectives des phases antérieure, de cran et postérieure.

D'une façon générale, chaque séquence d'activation correspondant à un cran est telle qu'au cours de la phase de cran, l'amplitude de la fonction modulation $A$ varie dans une plage de variation significativement plus importante que dans les phases antérieure et postérieure de la séquence. L'amplitude de modulation conditionne la friction du doigt sur la surface de l'organe de contrôle 2. La perception d'un cran est réaliste lorsque avant et après le cran, la friction est relativement stable, et que lors du passage du cran, la friction varie significativement. Il en résulte une variation brusque de la vitesse du doigt lors du passage du cran, ce qui entraîne une perception d'un cran par l'utilisateur. La variation brusque de la vitesse peut être une décélération, une accélération, ou une combinaison accélération/décélération. Durant les phases antérieure et postérieure précédant et suivant un cran, la variation de l'amplitude de modulation est moindre que durant la phase de cran. Durant les phases antérieure et postérieure, l'amplitude de modulation peut être stable, par exemple nulle, comme représenté sur les figures 1F et 1H, sans que cela soit nécessaire. Une amplitude de modulation stable génère une sensation de planéité de la surface de l'organe de contrôle 2 avant ou après le passage d'un cran virtuel C.

Ainsi, si $\Delta A(t)$ correspond à la variation d'amplitude, une séquence temporelle de cran peut être tel que :

$$\max_{dt_c} |\Delta A(t)| > \max_{dt_a, dt_p} |\Delta A(t)| \quad (2)$$

Dans l'exemple des figures 1F et 1H, au cours de la phase de cran $dt_c$, l'amplitude de modulation de la plaque est progressivement augmentée, ce qui entraîne une perception croissante de glissement : la vitesse du doigt augmente. La phase de cran se termine par une rupture, engendrant un brusque ralentissement du doigt. La combinaison accélération/décélération induit une perception d'un cran.

Une séquence temporelle correspondant à un cran est de préférence telle que durant la phase de cran, la valeur absolue de la dérivée temporelle $A'(t)$ de la fonction de modulation présente une valeur maximale plus élevée que durant les phases antérieure et postérieure. Si $A(t)$ correspond à la fonction de modulation :

$$\max_{dt_c} |A'(t)| > \max_{dt_a, dt_p} |A'(t)| \quad (3)$$

Cela traduit le fait que durant la phase de cran, la fonction de modulation subit une variation d'amplitude plus élevée et/ou plus rapide que durant les phases antérieure et postérieure. Il en résulte une variation plus rapide et/ou plus importante de la friction, induisant une perception d'un cran au niveau du doigt.

Deux phases de crans, correspondant à deux crans successifs, sont temporellement espacées d'une période dt. La période dt est adaptée en fonction d'une variation de la position du doigt 9 le long de l'organe de contrôle 2. Par exemple, la période dt est d'autant plus courte que la vitesse de déplacement du doigt est élevée : il en résulte une sensation, au niveau du doigt de l'utilisateur, de crans temporellement rapprochés. Ainsi, en fonction de la vitesse du doigt, la période dt de la fonction de modulation est ajustée, cela afin d'améliorer le réalisme de la perception des crans.

La forme de chaque cran virtuel et l'espacement entre chaque cran virtuel sont prédéfinis numériquement, dans la mémoire 16 reliée à de l'unité de commande 15. Par forme d'un cran, on entend une forme ressentie par le doigt lors de la séquence d'activation correspondant au cran. Sur un même organe de contrôle, en fonction du paramètre 18 dont on souhaite ajuster la valeur, le nombre de crans peut être variable. De même que l'espacement entre des crans successifs, ce dernier n'étant pas forcément régulier. Aussi, la mémoire 16 reliée à l'unité de commande 15 peut comporter, pour un même organe de contrôle, une bibliothèque de textures virtuelles, chaque texture correspondant à une forme et à une répartition de crans sur l'organe de contrôle 2.

Outre la période temporelle entre deux crans successifs, il est possible de moduler la sensation de cran perçue par le doigt. La figure 1I montre un autre exemple de séquence d'activation permettant le ressenti d'un autre effet de crans, différent de l'effet de crans obtenu selon la séquence représentées sur la figure 1H. Sur la figure 1I, la porteuse est identique à la porteuse représentée sur la figure 1G. La fonction de modulation est triangulaire décroissante.

D'autres séquences d'activation produisant un signal de crans sont envisageables, par exemple avec une fonction de modulation dont la forme temporelle comporte des créneaux ou présente une allure sinusoïdale. Cela permet d'obtenir une grande variété de sensations de crans au niveau du doigt 9. Par exemple, on peut obtenir des crans générant une perception de résistance augmentant progressivement. Une séquence de crans est paramétrée par la fréquence et/ou la forme de la porteuse et/ou la forme et/ou l'amplitude de la fonction de modulation . La fonction de modulation *A* peut être composée de plusieurs composantes élémentaires permettant de créer des effets plus complexes.

La génération d'un effet de clic, comme décrite en lien avec la figure 1D, est généralement effectuée en adressant une séquence d'activation ininterrompue, de durée Δt, sous l'effet d'une pression du doigt (ou plus généralement du corps externe 9) sur l'organe de contrôle 2. Par séquence d'activation ininterrompue, on entend une séquence d'activation s'étendant entre un instant initial et un instant final, sans interruption.

Dans une variante décrite en lien avec la figure 4A, l'effet de clic peut être activé lors d'une variation du nombre de doigts contactant l'organe de contrôle 2.

Selon une variante, le procédé peut générer deux clics rapprochés successifs, voire davantage, chaque clic étant espacé d'un autre clic par une courte durée, alors que le doigt maintient la pression. La séquence d'activation correspondant à l'ensemble des clics peut être de préférence d'une durée totale inférieure à 10 ms.

Dans l'exemple schématisé sur la figure 2A, l'organe de contrôle est immobile par rapport à la plaque 10. Il ne comporte aucun composant mobile par rapport à la plaque 10. Il en est de même de l'organe de contrôle représenté sur les figures 2B à 2E. Cela correspond à une conception mécanique particulièrement simple de l'interface.

Dans l'exemple schématisé sur la figure 2B, le capteur 14 ne comporte pas de capteur de pression $14_b$ : le signal d'état S(t) adressé à l'unité de commande 15 ne comporte qu'une composante $S_a(t)$ représentative de la position d'un contact du doigt 9 sur l'organe de contrôle 2.

L'organe de contrôle 2 représenté sur la figure 2C est particulièrement simple, puisqu'il ne comporte pas de conducteurs électriques 3 s'étendant à partir de l'extrémité proximale $2_p$. Dans l'exemple schématisé sur la figure 2C, le capteur 14 ne comporte pas de capteur de position $14_a$ : le signal d'état S(t) adressé à l'unité de commande 15 ne comporte qu'une composante $S_b(t)$ représentative de la pression exercée par le doigt 9 sur l'organe de contrôle 2.

L'écran 11 peut être disposé à distance de l'interface 2. Ce cas de figure est représenté sur la figure 2D, sur laquelle l'écran est intégré au dispositif 20 commandé par l'interface 1, à distance de cette dernière.

Dans l'exemple schématisé sur la figure 2E, l'interface 1 comporte un écran 11 n'occupant qu'une partie de la surface de la plaque 10.

On va à présent décrire des exemples d'utilisation de l'interface 1.

## Premier exemple d'utilisation

Selon un premier exemple d'utilisation, l'interface 1 est telle que schématisée sur les figures 1A, 1B, 1C, 1E et 2A. L'unité de commande 15 reçoit un signal d'état S(t) comportant une composante de position $S_a(t)$ ainsi qu'une composante de pression $S_b(t)$. Le doigt 9 de l'utilisateur peut glisser autour de l'organe de contrôle 2, comme représenté sur les figures 1A, 1C et 1E. La présence des éléments conducteurs 3, couplés capacitivement aux pistes conductrices 13, permet de déterminer la position du doigt 9 sur l'organe de contrôle 2. En fonction de la position du doigt, ou d'une variation de la position du doigt, l'unité de commande 15 adresse un signal d'activation Act(t) à chaque transducteur 12, de façon à former une vibration ultrasonique 19, modulant un frottement du doigt 9 avec la surface de l'organe de contrôle 2. Il en résulte une impression de rugosité augmentée ou diminuée. L'utilisateur ressent ainsi un effet de crans procurés par la modulation du frottement. La modulation du frottement dépend du signal d'activation commandant les transducteurs 12. Afin d'obtenir un effet de crans, le signal d'activation peut être telle que décrit en lien avec les figures 1E à 1I.

Selon une possibilité, à partir de la composante de position $S_a(t)$, l'unité de commande 15 détermine une position du doigt par rapport à des positions prédéterminées. L'unité de commande 15 adresse une séquence d'activation de type « effet de crans », telle que décrite en lien avec les figures 1E à 1I, de manière à induire une sensation de cran lors du passage du doigt au niveau d'une position déterminée. Dans la mémoire 16 reliée à l'unité de commande 15, à chacune desdites positions prédéterminées correspond un cran virtuel C.

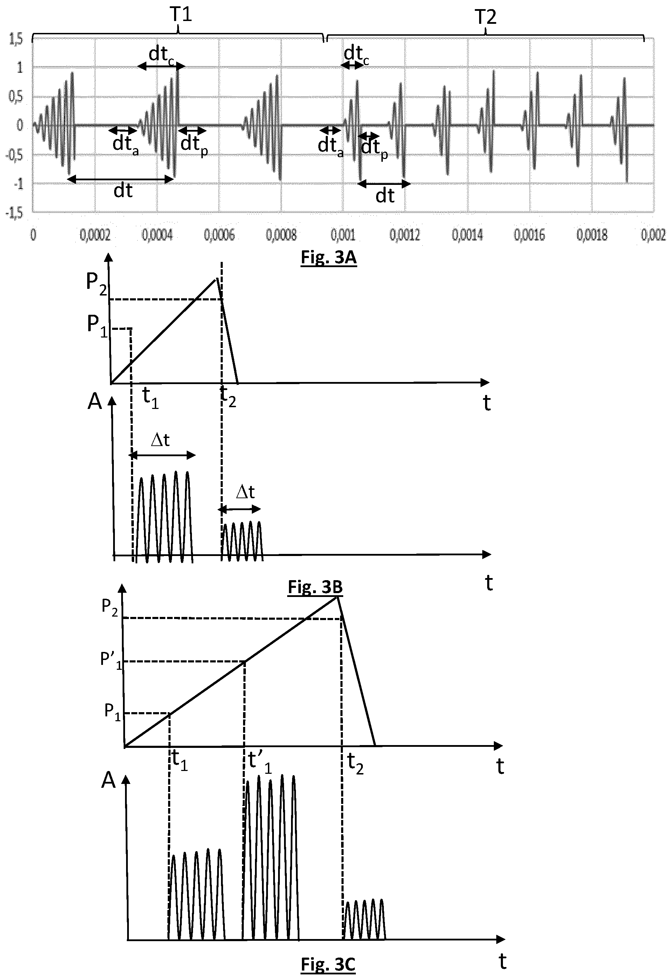

Selon une autre possibilité, à partir de la composante de position $S_a(t)$, l'unité de commande 15 détermine une variation de la position du doigt, et par exemple une vitesse de déplacement du doigt le long de l'organe de contrôle 2. Le signal d'activation peut être paramétré en fonction de la vitesse de déplacement. Par exemple, plus la vitesse de déplacement est élevée, plus la période dt du signal d'activation diminue. La figure 3A représente une variation d'un signal d'activation en fonction d'une vitesse de déplacement d'un doigt. Durant un premier intervalle temporel T1, le doigt glisse le long de l'organe de contrôle 2 à une certaine vitesse. Durant un deuxième intervalle temporel T2, postérieur à l'intervalle temporel T1, le doigt glisse le long de l'organe de contrôle 2 à une vitesse plus élevée. Il en résulte une modification du signal d'activation. Ainsi, le signal d'activation, et notamment sa période dt, peut être modifié en fonction de la vitesse du doigt le long ou autour de l'organe de contrôle 2.

Comme préalablement indiqué, lorsque le doigt 9 glisse le long de l'organe de contrôle 2, l'unité de commande 15 génère un effet de crans. L'effet de crans mime une sensation de crans, que l'on obtiendrait en déplaçant une molette mécanique crantée.

Lorsque le doigt 9 appuie contre l'extrémité distale $2_d$, en direction de la plaque 10, la composante de pression $S_b(t)$ est représentative de l'augmentation de la pression exercée. Lorsqu'un seuil de pression $P_1$, dit premier seuil d'enfoncement, est atteint, l'unité de commande 15 adresse un signal de commande Act(t) aux transducteurs, de façon que ces derniers génèrent une vibration ultrasonique, selon une séquence d'activation telle que décrite en lien avec la figure 1D. La durée $\Delta t$ de la séquence d'activation peut être par exemple comprise entre 1ms et 1s, et de préférence entre 1 ms et 100 ms. La vibration ultrasonique 19, se propage jusqu'à l'organe de contrôle 2 où elle est ressentie indirectement par le doigt 9 de l'utilisateur. La séquence d'activation forme un effet de clic, ressenti par l'utilisateur. L'effet de clic effectué par l'interface mime un effet de clic mécanique ressenti lorsqu'on enfonce avec le doigt sur un bouton mécanique classique. Lorsque l'effet de clic est ressenti par l'utilisateur, ce dernier peut alors relâcher la pression.

De façon optionnelle, sous l'effet d'un relâchement du doigt de l'utilisateur, lorsque la pression appliquée sur la plaque 10 diminue et passe au-dessous d'un seuil de relâchement $P_2$, l'unité de commande 15 peut adresser un signal d'activation aux transducteurs 12, de manière à former un deuxième effet clic, similaire ou différent de l'effet de clic généré lors du franchissement du premier seuil d'enfoncement $P_1$. Sur la figure 3B, on a représenté une évolution de la pression exercée sur la plaque en fonction du temps, ainsi que l'amplitude de vibration de la plaque en fonction du temps. A un instant $t_1$, la pression exercée dépasse le seuil d'enfoncement $P_1$, ce qui entraîne la génération d'un effet de clic. Le seuil de relâchement $P_2$ est franchi à un instant $t_2$. Dans cet exemple, l'amplitude de vibration A de la plaque, lors du franchissement du seuil de relâchement, est inférieure à l'amplitude de vibration de la plaque lors du franchissement du premier seuil d'enfoncement $P_1$. Selon des alternatives, la durée $\Delta t$ de chaque séquence d'activation est modulable : elle peut être plus longue lors du passage du premier seuil d'enfoncement $P_1$ et plus courte lors du franchissement du seuil de relâchement $P_2$, ou inversement.

Ainsi, afin de déclencher une séquence d'activation générant un effet de clic, l'unité de commande 15 peut prendre en compte non seulement le niveau de pression exercé sur la plaque, mais également le sens de variation, croissant ou décroissant du niveau de pression. Le déclenchement du seuil d'enfoncement peut être effectué alors que la pression exercée est croissante, tandis que le déclenchement du seuil de relâchement est effectué alors que la pression exercée est décroissante.

De façon optionnelle, plusieurs seuils d'enfoncement peuvent être définis. Cela est illustré sur la figure 3C : un deuxième seuil d'enfoncement $P'_1$ est défini. Lorsque le deuxième seuil d'enfoncement $P'_1$ est franchi, à l'instant $t'_1$, tandis que la pression exercée sur la plaque augmente, l'unité de commande 15 peut commander une séquence d'activation des transducteurs 12 différente de la séquence d'activation déclenchée lors du franchissement du premier seuil d'enfoncement $P_1$. Dans l'exemple représenté sur la figure 3C, l'amplitude de vibration correspondant au deuxième seuil d'enfoncement $P'_1$ est supérieure à l'amplitude de vibration correspondant au premier seuil d'enfoncement $P_1$. Le nombre de seuils d'enfoncement différents peut être supérieur à 2.

Un exemple d'application d'un tel mode de réalisation correspond à l'ajustement d'une valeur d'un paramètre 18, puis de la validation de la valeur sélectionnée. Le doigt 9 peut glisser autour de la face latérale $2_a$ de l'organe de contrôle 2. En fonction de l'évolution de la position du doigt par rapport à différents éléments conducteurs 3, l'unité de commande 15 détermine un sens de rotation du doigt. En fonction du sens de rotation, et éventuellement de la vitesse de rotation, la valeur du paramètre 18 est soit augmentée, soit diminuée, d'un ou plusieurs incréments. L'unité de commande 15 définit la relation entre la position du doigt (et/ou la vitesse du doigt) et le passage d'un incrément du paramètre. La valeur du paramètre 18 peut être affichée sur une partie 11' de l'écran 11, comme représentée sur la figure 1A.

Le retour haptique généré par l'interface 1 permet à l'utilisateur de ressentir chaque incrément, ce qui permet un ajustement précis du paramètre 18. Le retour haptique correspond à un effet de crans, tel que décrit en lien avec les figures 1E à 1I ainsi qu'avec la figure 3A. Lors du franchissement d'un incrément, l'unité de commande 15 adresse un signal de commande Com(t) au dispositif 20, de façon à modifier la valeur du paramètre d'un incrément.

Afin de confirmer une valeur sélectionnée d'un paramètre, le doigt 9 appuie sur l'extrémité distale $2_d$ vers la plaque 10. L'effet de clic qui en résulte permet d'informer que la valeur sélectionnée est validée. Lorsque le doigt 9 de l'utilisateur appuie sur l'organe de contrôle 2, la pression augmente progressivement, jusqu'à un premier seuil d'enfoncement $P_1$, tel que décrit en lien avec la figure 3B. La pression exercée est détectée par le capteur de pression $14_b$. L'unité de commande 15 génère alors un signal d'activation commandant une séquence d'activation des transducteurs 12. Cette séquence d'activation est représentative d'un effet de clic. Le retour haptique généré par l'interface permet à l'utilisateur de ressentir l'effet de clic. Il est alors informé que son action de pression a été prise en compte par l'interface 1. L'unité de commande 15 adresse également un signal de commande Com(t) au dispositif 20, de façon à valider la valeur du paramètre sélectionnée par l'utilisateur.

Selon un autre exemple d'application, lorsque le doigt se déplace le long de l'organe de contrôle 2, l'écran 11 affiche différentes options, selon un mode dit de navigation. A chaque incrément, une nouvelle option est proposée. Lorsque l'utilisateur souhaite conserver une option, il valide l'option proposée en appuyant son doigt 9 sur l'extrémité distale $2_d$.

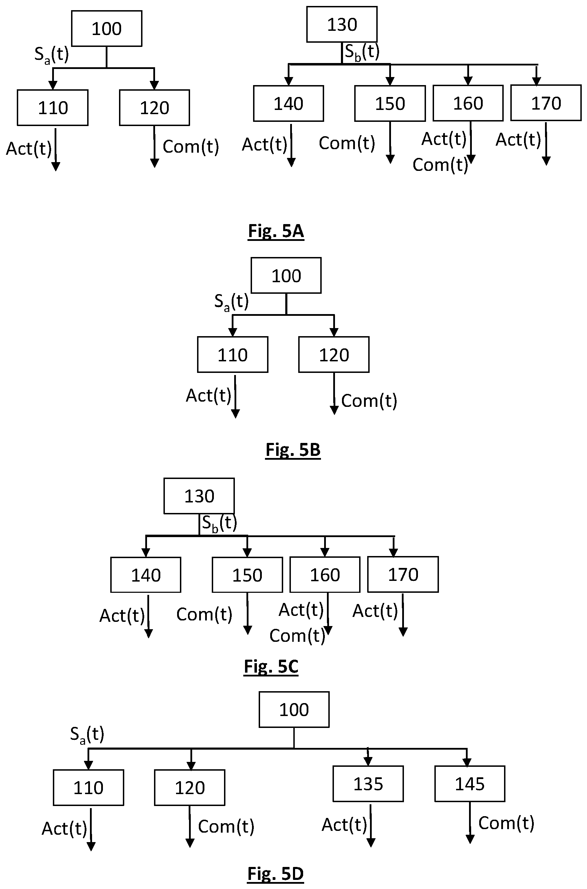

Les principales étapes de ce premier exemple d'utilisation sont résumées sur la figure 5A.

Etape 100 : détection d'une position d'un point de contact sur l'organe de contrôle 2, à l'aide du capteur de position $14_a$.

Etape 110 : lorsqu'un changement de la position d'un point de contact a été détecté, déclenchement, par l'unité de commande 15, d'un signal d'activation Act(t) des transducteurs 12, selon une ou plusieurs séquences d'activation représentatives d'un effet de crans.

Etape 120 : lorsqu'un changement de la position d'un point de contact a été détecté, déclenchement, par l'unité de commande 15, d'un signal de commande Com(t) vers le dispositif 20, de façon à ajuster un paramètre 18, ou une valeur du paramètre 18.

Les étapes 110 et 120 peuvent être mises en œuvre simultanément.

Etape 130 : détection d'une pression exercée sur la plaque par l'organe de contrôle 2, à l'aide du capteur de pression $14_b$.

Etape 140 : lorsque la pression exercée augmente et franchit le premier seuil d'enfoncement $P_1$, déclenchement, par l'unité de commande 15, d'un signal d'activation Act(t) des transducteurs 12, selon une séquence d'activation représentative d'un effet de clic.

Etape 150 : lorsque la pression exercée augmente et franchit le premier seuil d'enfoncement $P_1$, déclenchement, par l'unité de commande 15, d'un signal de commande Com(t) vers le dispositif 20, de façon à valider le paramètre 18 sélectionné.

Les étapes 140 et 150 peuvent être mises en œuvre simultanément.

Etape 160 (optionnelle) : lorsque la pression exercée augmente et franchit le deuxième seuil d'enfoncement $P'_1$, déclenchement, par l'unité de commande 15, d'un signal de commande Com(t) vers le dispositif 20, de façon à effectuer une action complémentaire, par exemple une annulation de la validation du paramètre. Parallèlement, un signal d'activation Act(t) est adressé aux transducteurs 12, selon une séquence d'activation d'un effet de clic correspondant à un deuxième seuil d'enfoncement. L'effet de clic correspondant au deuxième seuil d'enfoncement peut être similaire à l'effet de clic correspondant au premier seuil d'enfoncement ou différent.

Etape 170 (optionnelle) : lorsque la pression exercée diminue et franchit le seuil de relâchement $P_2$, déclenchement, par l'unité de commande 15, d'un signal d'activation Act(t) des transducteurs 12, selon une séquence d'activation représentative d'un effet de clic correspondant à un relâchement de la pression. Cet effet de clic peut être similaire ou différent des effets de clic précédents.

Deuxième exemple d'utilisation.

Selon un deuxième exemple d'utilisation, décrit en lien avec la figure 2B, un effet de crans, tel que précédemment décrit, est généré lorsque le doigt de l'utilisateur glisse le long de l'organe de contrôle 2, en interagissant avec différents éléments conducteurs 3, comme décrit en lien avec le premier exemple d'utilisation. Cela entraîne un retour haptique de l'interface par effet de crans.

Selon cet exemple, l'interface 1 ne comporte pas de capteur de pression $14_b$. L'utilisateur peut déplacer un ou plusieurs doigts 9 sur la paroi latérale $2_a$, de façon à glisser successivement face à différents éléments conducteurs 3. Un tel contact est détecté par le capteur de position $14_a$.

Cela entraîne un retour haptique de l'interface par effet de crans, tel que décrit en lien avec le premier exemple d'utilisation.

Un exemple d'application peut être l'ajustement d'une valeur d'un paramètre lorsque le doigt 9 glisse le long de l'organe de contrôle 2, comme décrit dans le premier exemple d'utilisation. Au cours de l'ajustement, l'unité de commande 15 adresse un signal de commande

Com(t) au dispositif 20, représentatif d'un ajustement de la valeur du paramètre.

Les principales étapes de ce deuxième exemple d'utilisation sont résumées sur la figure 5B. Les étapes 100 à 120 sont décrites dans le premier exemple d'utilisation.

Troisième exemple d'utilisation

Selon un troisième exemple d'utilisation, décrit en lien avec la figure 2C, l'interface 2 ne comporte pas de capteur de position $14_a$. Lorsque le doigt 9 appuie contre l'extrémité distale $2_d$, en direction de la plaque 10, la composante de pression $S_b(t)$ est représentative de l'augmentation (ou de la diminution) de la pression exercée par le doigt 9. Le signal d'activation adressé par l'unité de commande 15 aux transducteurs 12 dépend du niveau de pression et du sens de variation de ladite pression, comme décrit en lien avec le premier exemple d'utilisation ainsi que sur les figures 3B et 3C.

Les principales étapes de ce troisième exemple d'utilisation sont résumées sur la figure 5C. Ces étapes sont décrites dans le premier exemple d'utilisation.

Quatrième exemple d'utilisation

Selon un quatrième mode de réalisation, décrit en lien avec la figure 4A, l'interface comporte un capteur de position $14_a$, et éventuellement un capteur de pression $14_b$. Selon cet exemple, à partir de la composante $S_a(t)$ transmise par le capteur de position $14_a$, l'unité de commande 15 génère un retour haptique dépendant d'un nombre de points de contacts identifiés par le capteur de position, le nombre de points de contact augmentant ou diminuant. Sur la figure 4A, on a représenté un premier doigt 9 et un deuxième doigt 9'. L'unité de commande 15 peut adresser un signal d'activation aux transducteurs 12 lorsque le nombre de points de contacts, sur l'organe de contrôle 2, est modifié.

Par exemple, comme préalablement décrit, lorsqu'un seul doigt glisse le long de l'organe de contrôle 2, l'unité de commande 15 adresse un signal d'activation correspondant à un effet de crans. Cette phase peut correspondre à l'ajustement d'une valeur d'un paramètre.

Lorsqu'un deuxième doigt est appliqué sur l'organe de contrôle, le capteur de position détecte deux points de contacts. Dans ce cas, l'unité de commande 15 adresse un signal d'activation correspondant à un effet de clic, différent de l'effet de crans. Cette phase peut correspondre à la validation de la valeur du paramètre sélectionnée.

Dans un tel exemple d'utilisation, l'ajustement de la valeur du paramètre est effectué comme décrit en lien avec le premier exemple de réalisation. La validation du paramètre est effectuée non pas en appliquant une pression, mais en modifiant le nombre de points de contact sur l'organe de contrôle, par augmentation ou diminution du nombre de points de contact.

Les principales étapes de ce quatrième exemple d'utilisation sont similaires à celles décrites en lien avec la figure 5D. Outre les étapes 100, 110, et 120 décrites en lien avec la figure 5A, cet exemple d'utilisation comprend les étapes suivantes :

Etape 135 : lorsque le capteur de position détecte une variation du nombre de points de contacts, l'unité de commande 15 adresse un signal d'activation Act(t) aux transducteurs 12, selon une séquence d'activation représentative d'un effet de clic.

Etape 145 : lorsque le capteur de position détecte une variation du nombre de points de contacts, l'unité de commande 15 adresse également un signal de commande Com(t) vers le dispositif 20, de façon à valider le paramètre 18 sélectionné.

Variantes

Dans les exemples qui précèdent, l'organe de contrôle 2 a une forme cylindrique. Comme précédemment indiqué, d'autres formes peuvent être envisagées. Dans l'exemple représenté sur la figue 4B, l'organe de contrôle 2 présente une forme parallélépipédique. Différents éléments conducteurs 3 sont espacés les uns des autres, selon l'axe latéral X. Le doigt de l'utilisateur peut glisser le long de la surface latérale $2_a$ ou de l'extrémité distale $2_d$ de l'organe de contrôle, de manière à contacter successivement différents éléments conducteurs 3, comme précédemment décrit. Cela permet par exemple un ajustement d'une valeur d'un paramètre, comme explicité en lien avec les premier, deuxième, et quatrième exemples d'utilisation. Le déplacement du doigt est détecté par un capteur de position $14_a$.

Selon cette variante, l'interface 1 peut comporter un capteur de pression $14_b$, de façon à détecter une pression exercée sur l'organe de contrôle 2, vers la plaque 10.

Une telle variante est compatible avec le quatrième exemple d'utilisation, dans lequel l'unité de commande peut prend en compte une variation du nombre de points de contact sur l'organe de contrôle 2.

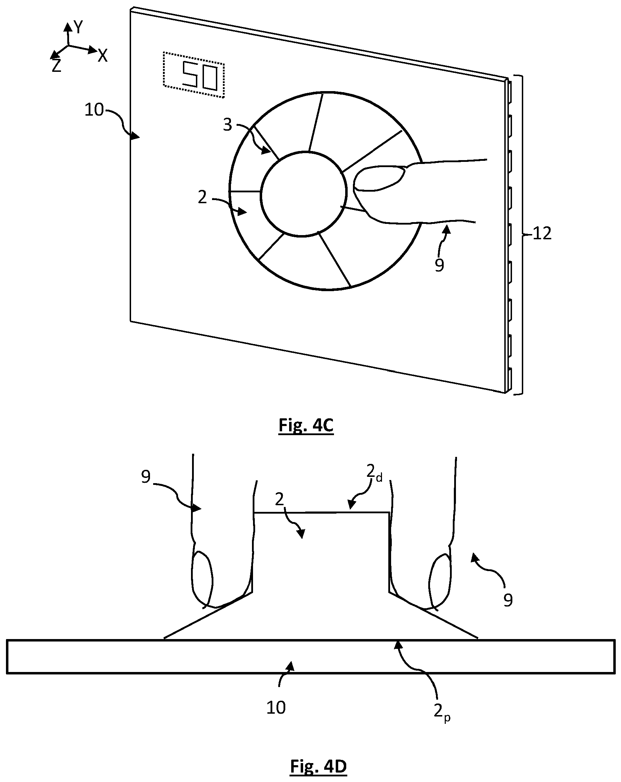

Dans l'exemple représenté sur la figure 4C, l'organe de contrôle 2 présente une forme tronconique.

Sur la figure 4D, on a représenté un organe de contrôle 2 dont la forme géométrique convient particulièrement à une mise en œuvre de l'invention. L'organe de contrôle 2 s'étend, à partir de l'extrémité distale $2_d$, selon une forme cylindrique. Puis, il s'évase jusqu'à l'extrémité proximale $2_p$, en formant une jupe. Lorsque le doigt ou les doigts 9 sont appliqués au niveau de l'interface entre la partie cylindrique et la jupe, la surface de contact du ou des doigts sur l'organe de contrôle 2 est augmentée. Il en résulte un meilleur ressenti du retour haptique. De plus, cette forme évasée a l'avantage de réduire les contacts directs entre l'extrémité du ou des doigts 9 et la plaque 10 lors de la préhension de l'organe de contrôle 2, ce contact direct pouvant parasiter la reconnaissance de la position du ou des doigts ou de leur déplacement sur l'organe contrôle 2.

L'interface selon l'invention peut être pilotée à l'aide d'un doigt d'un utilisateur, ou à l'aide de tout autre corps externe 9 permettant d'entrer en contact avec l'organe de contrôle 2. Lorsque le capteur de position met en œuvre une détection capacitive, le corps externe est électriquement conducteur.

L'interface convient à la commande de dispositifs grands publics, par exemple dans le domaine de l'électroménager. Elle permet par exemple de commander une température d'un four ou un programme de lave-linge, tout en utilisant des organes de contrôle robustes, de fabrication simple et peu coûteuse. En effet, chaque organe de contrôle peut ne comporter aucune pièce mobile. L'interface permet d'exercer un retour haptique, perceptible par l'utilisateur. De préférence le retour haptique mime une réponse mécanique d'un organe mécanique mobile. Cela rend l'utilisation de l'interface simple et conviviale.

L'interface convient particulièrement à la commande d'un dispositif alors que la visibilité de l'utilisateur est réduite ou lorsque l'interface est située en dehors du champ de vision de l'utilisateur. C'est par exemple le cas lorsque l'utilisateur est un conducteur d'une automobile ou un pilote d'aéronef. Il peut aisément trouver et prendre en main l'organe de contrôle 2, du fait que ce dernier s'étende selon un volume tridimensionnel. Il n'est donc pas nécessaire de détourner l'attention, et de visualiser l'organe de contrôle. Ce dernier peut être facilement manipulé tout en étant en dehors du champ d'observation de l'utilisateur. Il s'agit d'une différence notable avec un écran tactile classique.

L'interface combine alors la facilité de prise en main et d'utilisation d'un organe de contrôle mécanique, tout en autorisant une modularité permise par un écran tactile : choix de différents menus, ajustement et sélection de différents paramètres. Le retour haptique constitue une aide à l'utilisation, en assurant l'utilisateur d'une prise en compte de son action sur l'organe de contrôle. L'utilisateur peut alors manipuler l'interface sans avoir à modifier son champ d'observation.

L'interface 1 tire profit de la faculté de générer une grande variété de signaux d'activation, permettant une génération d'autant d'effets de clic et/ou de crans différents. Et cela en utilisant un dispositif de conception mécanique très simple, puisque l'organe de contrôle 2 peut rester statique par rapport à la plaque 10, et peut ne comporter aucune pièce mobile. Il en résulte une interface dont le coût de fabrication est faible, de même que l'usure mécanique, du fait de l'absence de pièces mobiles dans l'organe de contrôle 2.

Un autre avantage est que la modification du ressenti du retour haptique peut être obtenue par un simple paramétrage du signal d'activation. A cette fin, l'unité de commande 15 peut faire l'objet de programmations spécifiques, de façon à s'adapter à un usage particulier. Une modification d'un ressenti peut être obtenu avec le même organe de contrôle 2 en ne nécessitant qu'une modification de la programmation ou de la mémoire reliée à l'unité de commande.

**Revendications**

1. Interface tactile (1), destinée à commander un dispositif (20), l'interface étant destinée à être touchée par un corps externe (9), et comportant :

   - une plaque (10) ;
   - au moins un transducteur (12), configuré pour mettre la plaque en vibration (10), selon une fréquence de vibration ultrasonique;

   l'interface étant **caractérisée en ce qu'**elle comporte :

   - un organe de contrôle (2), s'étendant à partir de la plaque, entre une extrémité proximale ($2_p$), appliquée contre la plaque et une extrémité distale ($2_d$), située à distance de la plaque, l'organe de contrôle étant destiné à être en contact avec le corps externe, l'organe de contrôle étant configuré pour être immobile par rapport à la plaque lorsqu'il est actionné par le corps externe ;
   - un capteur (14), configuré pour émettre un signal d'état (S(t)), le signal d'état étant représentatif d'un contact du corps externe sur l'organe de contrôle ;
   - une unité de commande (15), reliée au capteur (14), et configurée pour adresser, en fonction du signal d'état, un signal d'activation (Act(t)) audit au moins un transducteur, de façon à mettre en vibration la plaque ainsi que l'organe de contrôle, de telle sorte que sous l'effet de la vibration ultrasonique de l'organe de contrôle, une friction du corps externe par rapport à l'organe de contrôle est modifiée, entraînant un retour haptique de l'interface.

2. Interface selon la revendication 1, dans laquelle l'unité de commande (15) est configurée pour adresser un signal de commande (Com(t)) au dispositif (20) en fonction du signal d'état (S(t)).

3. Interface selon l'une quelconque des revendications 1 ou 2, dans laquelle l'organe de contrôle (2) est fixé contre la plaque (10).

4. Interface selon l'une quelconque des revendications précédentes, dans laquelle :

   - le capteur (14) comporte un capteur de pression ($14_b$), configuré pour mesurer une pression exercée par l'organe de contrôle (2), sur la plaque (10), le signal d'état comportant une composante de pression ($S_b(t)$), dépendant de la pression exercée ;

- l'unité de commande (15) est configurée pour adresser un signal d'activation ($Act(t)$) au transducteur lorsque la pression franchit un seuil prédéterminé ($P_1$, $P'_1$, $P_2$) ou en fonction d'une variation de pression.

5.  Interface selon la revendication 4, dans laquelle le capteur de pression comporte :

    - un télémètre, disposé face à la plaque, et configuré pour mesurer une distance (d) le séparant de la plaque, le télémètre étant configuré pour déterminer une déformation de la plaque sous l'effet d'une pression exercée sur la plaque ;
    - ou une jauge de contrainte, agencée pour se déformer sous l'effet d'une déformation de la plaque sous l'effet d'une pression exercée sur la plaque ;
    - ou un dynamomètre, disposé au contact de la plaque, et configuré pour détecter un déplacement de la plaque sous l'effet d'une pression exercée sur la plaque ;
    - ou un transducteur, configuré pour mesurer une variation d'une vibration de la plaque, la variation résultant d'une pression exercée sur la plaque.

6.  Interface selon l'une quelconque des revendications 4 ou 5, dans laquelle en fonction de la composante de pression mesurée par le capteur de pression ($14_b$), l'unité de commande (15) est configurée pour adresser un signal d'activation prenant la forme d'une séquence d'activation, la séquence d'activation étant paramétrée de telle sorte qu'un effet de clic soit ressenti par le corps externe, le clic formant un retour haptique de l'interface.

7.  Interface selon l'une quelconque des revendications précédentes, dans laquelle :

    - le capteur (14) comporte un capteur de position ($14_a$) capacitif, relié à un réseau de pistes conductrices (13) s'étendant parallèlement à la plaque ;
    - l'organe de contrôle (2) est formé d'un matériau électriquement isolant, et comporte des éléments conducteurs (3), électriquement isolés les uns des autres, s'étendant entre l'extrémité proximale ($2_p$) et l'extrémité distale ($2_d$);
    - au moins une piste conductrice (13) est disposée en contact capacitif avec au moins un élément conducteur (3) de l'organe de contrôle, de façon à autoriser un transfert de charges, par effet capacitif, entre le corps externe (9), et la piste conductrice, par l'intermédiaire de l'élément conducteur ;

de sorte que le signal d'état ($S(t)$) comporte une composante de position ($S_a(t)$), dépendant d'une position du contact entre le corps externe et l'organe de contrôle.

8.  Interface selon la revendication 7, dans laquelle l'unité de commande (15) est configurée pour adresser le signal d'activation ($Act(t)$) au transducteur lorsque la composante de position subit une variation représentative d'une variation de la position du contact entre le corps externe et l'organe de contrôle.

9.  Interface selon l'une quelconque des revendications 7 ou 8, dans laquelle en fonction de la composante de position mesurée par le capteur de position ($14_a$), le signal d'activation ($Act(t)$) est paramétré de façon qu'un effet de cran soit ressenti par le corps externe, l'effet de cran formant un retour haptique de l'interface, l'effet de cran correspondant à un ressenti, par le corps externe, d'au moins un cran virtuel, sur l'organe de contrôle.

10. Interface selon la revendication 9, dans laquelle le signal d'activation est établi à partir :

    - d'une porteuse périodique (*w*), la porteuse s'étendant, à chaque période, selon une amplitude ;
    - d'une fonction de modulation (A), variant en fonction de la composante de position ;

    de sorte que l'amplitude du signal d'activation résulte d'une modulation de la porteuse (*w*) par la fonction de modulation (A).

11. Interface selon la revendication 10, dans laquelle la fonction de modulation comporte successivement :

    - une phase antérieure ($dt_a$), lorsque le corps externe approche d'un cran ;
    - une phase de cran ($dt_c$), lorsque le corps externe franchit le cran ;
    - une phase postérieure ($dt_p$), lorsque le corps externe s'éloigne du cran ;
    de sorte que le ressenti du cran virtuel par l'utilisateur dépend de la fonction de modulation durant les phases antérieure, de cran et postérieure ;
    la fonction de modulation étant telle que lors de la phase de cran,

        - la fonction de modulation varie selon une plage de variation plus étendue que lors de la phase antérieure et lors de la phase postérieure ;

ou

- la fonction de modulation est telle qu'une valeur absolue de sa dérivée temporelle ($|A'(t)|$) atteint, une valeur maximale plus élevée que lors de la phase antérieure et lors de la phase postérieure

12. Interface selon l'une quelconque des revendications précédentes, dans laquelle l'organe de contrôle (2) ne comporte pas de composant mobile par rapport à la plaque (10).

13. Interface selon l'une quelconque des revendications précédentes, dans laquelle l'organe de contrôle (2) présente une forme géométrique d'un bouton ou d'une molette de réglage ou d'un curseur.

14. Dispositif (20), apte à être contrôlé par un paramètre (18), et comportant une interface (1) configurée pour sélectionner le paramètre ou régler une valeur du paramètre, le dispositif étant **caractérisé en ce que** l'interface est une interface selon l'une quelconque des revendications 1 à 13, l'interface étant configurée pour déterminer la valeur du paramètre ou sélectionner le paramètre en fonction du signal d'état (S(t)).

15. Procédé de commande d'une interface selon l'une quelconque des revendications 1 à 13, comportant :

a) application d'un corps externe (9) sur l'organe de contrôle (2);

b) formation, par le capteur (14), d'un signal d'état (S(t)), représentatif d'une position du corps externe sur l'organe de contrôle et/ou d'une pression exercée par l'organe de contrôle sur la plaque, sous l'effet du corps externe ;

c) en fonction du signal d'état, émission, par l'unité de commande, d'un signal d'activation (Act(t)) du transducteur (12) ou de chaque transducteur;

d) sous l'effet du signal d'activation, mise en vibration de la plaque, de sorte qu'une vibration ultrasonique se propage à travers l'organe de contrôle (2), de façon à induire un effet haptique sur le corps externe (9).

**Patentansprüche**

1. Berührungsempfindliche Schnittstelle (1) zur Steuerung einer Vorrichtung (20), wobei die Schnittstelle dazu bestimmt ist, von einem externen Körper (9) berührt zu werden, und Folgendes umfasst:

- eine Platte (10);
- mindestens einen Wandler (12), der so konfiguriert ist, dass er die Platte (10) mit einer Ultraschallfrequenz in Schwingung versetzt;

wobei die Schnittstelle **dadurch gekennzeichnet ist, dass** sie umfasst:

- ein Steuerelement (2), das sich von der Platte zwischen einem proximalen Ende ($2_p$), das an der Platte anliegt, und einem distalen Ende ($2_d$), das in einem Abstand von der Platte angeordnet ist, wobei das Steuerelement dazu bestimmt ist, mit dem externen Körper in Kontakt zu stehen, und das Steuerelement so konfiguriert ist, dass es in Bezug auf die Platte unbeweglich ist, wenn es durch den externen Körper betätigt wird;
- ein Sensor (14), der so konfiguriert ist, dass er ein Statussignal (S(t)) aussendet, wobei das Statussignal einen Kontakt des externen Körpers mit dem Steuerelement anzeigt;
- eine Steuereinheit (15), die mit dem Sensor (14) verbunden und so konfiguriert ist, dass sie in Abhängigkeit vom Statussignal ein Aktivierungssignal (Act(t)) an den mindestens einen Wandler zu senden, um die Platte sowie das Steuerelement in Schwingung zu versetzen, so dass unter der Wirkung der Ultraschallschwingung des Steuerelements eine Reibung des Außenkörpers gegenüber dem Steuerelement verändert wird, was zu einer haptischen Rückmeldung der Schnittstelle führt.

2. Schnittstelle nach Anspruch 1, wobei die Steuereinheit (15) so konfiguriert ist, dass sie der Vorrichtung (20) in Abhängigkeit vom Statussignal (S(t)) ein Steuersignal (Com(t)) zuführt.

3. Schnittstelle nach einem der Ansprüche 1 oder 2, wobei das Steuerelement (2) an der Platte (10) befestigt ist.

4. Schnittstelle nach einem der vorstehenden Ansprüche, wobei:

- der Sensor (14) einen Drucksensor ($14_b$) umfasst, der so konfiguriert ist, dass er einen vom Steuerelement (2) auf die Platte (10) ausgeübten Druck misst, wobei das Statussignal eine vom ausgeübten Druck abhängige Druckkomponente ($S_b(t)$) umfasst;
- die Steuereinheit (15) so konfiguriert ist, dass sie ein Aktivierungssignal (Act(t)) an den Wandler sendet, wenn der Druck einen vorgegebenen Schwellenwert ($P_1$, $P'_1$, $P_2$) überschreitet oder in Abhängigkeit von einer Druckänderung.

5. Schnittstelle nach Anspruch 4, wobei der Drucksensor umfasst:

- einen Entfernungsmesser, der gegenüber der Platte angeordnet und so konfiguriert ist, dass er einen Abstand (d) zwischen ihm und der Platte misst, wobei der Entfernungsmesser so konfiguriert ist, dass er eine Verformung der Platte unter dem Einfluss eines auf die Platte ausgeübten Drucks bestimmt;

- oder einen Dehnungsmessstreifen, der so angeordnet ist, dass er sich unter dem Einfluss einer Verformung der Platte unter dem Einfluss eines auf die Platte ausgeübten Drucks verformt;

- oder ein Dynamometer, das in Kontakt mit der Platte angeordnet und so konfiguriert ist, dass es eine Verschiebung der Platte unter dem Einfluss eines auf die Platte ausgeübten Drucks erfasst;

- oder ein Wandler, der so konfiguriert ist, dass er eine Änderung einer Schwingung der Platte misst, wobei die Änderung aus einem auf die Platte ausgeübten Druck resultiert.

6. Schnittstelle nach einem der Ansprüche 4 oder 5, wobei in Abhängigkeit von der vom Drucksensor ($14_b$) gemessenen Druckkomponente ist die Steuereinheit (15) so konfiguriert, dass sie ein Aktivierungssignal in Form einer Aktivierungssequenz sendet, wobei die Aktivierungssequenz so parametriert ist, dass ein Klick-Effekt vom externen Körper wahrgenommen wird, wobei der Klick eine haptische Rückmeldung der Schnittstelle bildet.

7. Schnittstelle nach einem der vorstehenden Ansprüche, wobei:

- der Sensor (14) einen kapazitiven Positionssensor ($14_a$) umfasst, der mit einem Netz aus Leiterbahnen (13) verbunden ist, die sich parallel zur Platte erstrecken;

- das Steuerelement (2) aus einem elektrisch isolierenden Material besteht und elektrisch voneinander isolierte leitfähige Elemente (3) aufweist, die sich zwischen dem proximalen Ende ($2_p$) und dem distalen Ende ($2_d$) erstrecken;

- mindestens eine Leiterbahn (13) in kapazitivem Kontakt mit mindestens einem Leiterelement (3) des Kontrollorgans angeordnet ist, so dass durch Kapazitiver effekt eine Ladungsübertragung zwischen dem Außenkörper (9) und der Leiterbahn über das Leiterelement möglich ist;

so dass das Statussignal (S(t)) eine Positionskomponente ($S_a$ (t)) aufweist, die von einer Position des Kontakts zwischen dem Außenkörper und dem Kontrollelement abhängt.

8. Schnittstelle nach Anspruch 7, wobei die Steuereinheit (15) so konfiguriert ist, dass sie das Aktivierungssignal (Act(t)) an den Wandler sendet, wenn die Positionskomponente eine Änderung erfährt, die eine Änderung der Position des Kontakts zwischen dem Außenkörper und dem Kontrollelement anzeigt.

9. Schnittstelle nach einem der Ansprüche 7 oder 8, wobei in Abhängigkeit von der vom Positionssensor ($14_a$) gemessenen Positionskomponente das Aktivierungssignal (Act(t)) so parametriert ist, dass ein Rastungseffekt am Außenkörper wahrgenommen wird, wobei der Rastungseffekt eine haptische Rückmeldung der Schnittstelle bildet und der Rastungseffekt einer Wahrnehmung mindestens einer virtuellen Rastung am Steuerorgan durch den Außenkörper entspricht.

10. Schnittstelle nach Anspruch 9, wobei das Aktivierungssignal aus :

- einem periodischen Träger (w), wobei sich der Träger in jeder Periode mit einer Amplitude ausbreitet;
- einer Modulationsfunktion (A), die in Abhängigkeit von der Positionskomponente variiert;

so dass die Amplitude des Aktivierungssignals aus einer Modulation des Trägers (w) durch die Modulationsfunktion (A) resultiert.

11. Schnittstelle gemäß Anspruch 10, wobei die Modulationsfunktion nacheinander umfasst:

- eine Vorphase ($dt_a$), wenn sich der externe Körper einer Stufe nähert;
- eine Schrittphase ($dt_c$), wenn der externe Körper den Schritt überschreitet;
- eine Nachphase ($dt_p$), wenn sich der externe Körper von der Raststellung entfernt;
so dass die Wahrnehmung der virtuellen Stufe durch den Benutzer von der Modulationsfunktion während der Vor-, Stufen- und Nachphase abhängt;
wobei die Modulationsfunktion so beschaffen ist, dass während der Rastphase

- die Modulationsfunktion in einem größeren Bereich variiert als in der Vorphase und in der Nachphase;
oder
- die Modulationsfunktion so ist, dass ein Absolutwert ihrer zeitlichen Ableitung($|A'(t)|$) einen höheren Maximalwert erreicht als in der Vorphase und in der Nachphase

**12.** Schnittstelle nach einem der vorstehenden Ansprüche, wobei das Steuerelement (2) keine gegenüber der Platte (10) bewegliche Komponente aufweist.

**13.** Schnittstelle nach einem der vorstehenden Ansprüche, wobei das Steuerelement (2) die geometrische Form eines Knopfes, eines Einstellrads oder eines Schiebereglers aufweist.

**14.** Vorrichtung (20), die durch einen Parameter (18) steuerbar ist und eine Schnittstelle (1) aufweist, die zum Auswählen des Parameters oder zum Einstellen eines Wertes des Parameters konfiguriert ist, wobei die Vorrichtung **dadurch gekennzeichnet ist, dass** die Schnittstelle eine Schnittstelle gemäß einem der Ansprüche 1 bis 13 ist, wobei die Schnittstelle dazu konfiguriert ist, den Wert des Parameters zu bestimmen oder den Parameter in Abhängigkeit vom Statussignal (S(t)) auszuwählen.

**15.** Verfahren zum Steuern einer Schnittstelle gemäß einem der Ansprüche 1 bis 13, mit:

> a) Anlegen eines externen Körpers (9) an das Steuerelement (2);
> b) Bilden eines Statussignals (S(t)) durch den Sensor (14), das eine Position des externen Körpers auf dem Steuerelement und/oder einen Druck repräsentiert, der durch das Steuerelement auf die Platte unter der Wirkung des externen Körpers ausgeübt wird;
> c) in Abhängigkeit vom Statussignal, Aussenden eines Aktivierungssignals (Act(t)) des Wandlers (12) oder jedes Wandlers durch die Steuereinheit;
> d) Unter der Wirkung des Aktivierungssignals wird die Platte in Schwingung versetzt, so dass sich eine Ultraschallschwingung durch das Kontrollorgan (2) ausbreitet, um eine haptische Wirkung auf den externen Körper (9) auszulösen.

**Claims**

**1.** A touch interface (1), intended to control a device (20), the interface being intended to be touched by an external body (9), and comprising:

> - a plate (10);
> - at least one transducer (12), configured to vibrate the plate (10) at an ultrasonic vibration frequency;

the interface being **characterized in that** it comprises:

> - a control member (2), extending from the plate, between a proximal end ($2_p$), applied against the

plate, and a distal end ($2_d$), located at a distance from the plate, the control member being intended to be in contact with the external body, the control member being configured to be stationary with respect to the plate when it is actuated by the external body;
> - a sensor (14), configured to emit a state signal (S(t)), the state signal being representative of contact of the external body on the control member;
> - a control unit (15), connected to the sensor (14), and configured to send, on the basis of the state signal, an activation signal (Act(t)) to said at least one transducer, so as to vibrate the plate and the control member, such that, under the effect of the ultrasonic vibration of the control member, a friction of the external body with respect to the control member is modified, leading to haptic feedback from the interface.

**2.** The interface as claimed in claim 1, wherein the control unit (15) is configured to send a control signal (Com(t)) to the device (20) on the basis of the state signal (S(t)).

**3.** The interface as claimed in either one of claims 1 and 2, wherein the control member (2) is fixed against the plate (10).

**4.** The interface as claimed in any one of the preceding claims, wherein:

> - the sensor (14) comprises a pressure sensor ($14_b$), configured to measure a pressure exerted by the control member (2) on the plate (10), the state signal comprising a pressure component ($S_b(t)$), depending on the exerted pressure;
> - the control unit (15) is configured to send an activation signal (Act(t)) to the transducer when the pressure crosses a predetermined threshold ($P_1$, $P'_1$, $P_2$) or on the basis of a pressure variation.

**5.** The interface as claimed in claim 4, wherein the pressure sensor comprises:

> - a rangefinder, arranged facing the plate, and configured to measure a distance (d) separating it from the plate, the rangefinder being configured to determine a deformation of the plate under the effect of a pressure exerted on the plate;
> - or a strain gauge designed to deform under the effect of a deformation of the plate under the effect of a pressure exerted on the plate;
> - or a dynamometer, arranged in contact with the plate, and configured to detect a movement of the plate under the effect of a pressure exerted on the plate;
- or a transducer, configured to measure a variation in a vibration of the plate, the variation resulting from a pressure exerted on the plate.

6. The interface as claimed in either one of claims 4 and 5, wherein, depending on the pressure component measured by the pressure sensor ($14_b$), the control unit (15) is configured to send an activation signal that takes the form of an activation sequence, the activation sequence being parameterized such that a clicking effect is felt by the external body, the click forming haptic feedback from the interface.

7. The interface as claimed in any one of the preceding claims, wherein:

- the sensor (14) comprises a capacitive position sensor ($14_a$), connected to a network of conductive tracks (13) extending parallel to the plate;
- the control member (2) is formed of an electrically insulating material, and comprises conductive elements (3), electrically insulated from one another, extending between the proximal end ($2_p$) and the distal end ($2_d$);
- at least one conductive track (13) is arranged in capacitive contact with at least one conductive element (3) of the control member, so as to allow a charge transfer, through a capacitive effect, between the external body (9) and the conductive track, by way of the conductive element;

such that the state signal (S(t)) comprises a position component ($S_a(t)$), depending on a position of the contact between the external body and the control member.

8. The interface as claimed in claim 7, wherein the control unit (15) is configured to send the activation signal (Act(t)) to the transducer when the position component undergoes a variation representative of a variation in the position of the contact between the external body and the control member.

9. The interface as claimed in either one of claims 7 and 8, wherein, depending on the position component measured by the position sensor (14a), the activation signal (Act(t)) is parameterized such that a notch effect is felt by the external body, the notch effect forming haptic feedback from the interface, the notch effect corresponding to the external body feeling at least one virtual notch on the control member.

10. The interface as claimed in claim 9, wherein the activation signal is established from:

- a periodic carrier (w), the carrier extending, in each period, over an amplitude;
- a modulation function (A), varying on the basis of the position component;

such that the amplitude of the activation signal results from a modulation of the carrier (w) by the modulation function (A).

11. The interface as claimed in claim 10, wherein the modulation function successively comprises:

- an anterior phase ($dt_a$), when the external body approaches a notch;
- a notch phase ($dt_c$), when the external body crosses the notch;
- a posterior phase ($dt_p$), when the external body moves away from the notch;
such that the feeling of the virtual notch by the user depends on the modulation function during the anterior, notch and posterior phases;
the modulation function being such that, in the notch phase :

- the modulation function varies over a wider range of variation than in the anterior phase and in the posterior phase;
or
- the modulation function is such that an absolute value of its time derivative ($|A'(t)|$) reaches a higher maximum value than in the anterior phase and in the posterior phase.

12. The interface as claimed in any one of the preceding claims, wherein the control member (2) does not comprise any component that is mobile with respect to the plate (10).

13. The interface as claimed in any one of the preceding claims, wherein the control member (2) has the geometric shape of a button or a control wheel or a slider.

14. A device (20), able to be controlled by a parameter (18), and comprising an interface (1) configured to select the parameter or set a value of the parameter, the device being **characterized in that** the interface is an interface as claimed in any one of claims 1 to 13, the interface being configured to determine the value of the parameter or to select the parameter on the basis of the state signal (S(t)).

15. A method for controlling an interface as claimed in any one of claims 1 to 13, comprising:

a) applying an external body (9) to the control member (2);
b) the sensor (14) forming a state signal (S(t)), representative of a position of the external body on the control member and/or of a pressure exerted by the control member on the plate, under the effect of the external body;

c) the control unit emitting, on the basis of the state signal, an activation signal (Act(t)) for the transducer (12) or for each transducer;

d) under the effect of the activation signal, vibrating the plate, such that an ultrasonic vibration propagates through the control member (2), so as to bring about a haptic effect on the external body (9).

**Fig. 1A**

**Fig. 1B**

**Fig. 1C**

**Fig. 1D**

**Fig. 1E**

**Fig. 1F**

**Fig. 1G**

**Fig. 1H**

**Fig. 1I**

**Fig. 2A**

**Fig. 2B**

**Fig. 2C**

EP 4 232 884 B1

Fig. 2D

Fig. 2E

28

**Fig. 3A**

**Fig. 3B**

**Fig. 3C**

**Fig. 4A**

**Fig. 4B**

**Fig. 4C**

**Fig. 4D**

**Fig. 5A**

**Fig. 5B**

**Fig. 5C**

**Fig. 5D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1956466 A
- JP 6739692 B
- FR 1907542

- FR 05072019
- EP 3566115 A
- FR 1909660

**Littérature non-brevet citée dans la description**

- Squeeze film effect for the design of an ultrasonic tactile plate. **BIET M. et al.** IEEE Transactions on Ultrasonic, Ferroelectrics and Frequency Control. IEEE, 2007, vol. 54, 2678-2688

- **VEZZOLI et al.** Couplage vibration ultrasonique et électro-vibration pour la stimulation tactile. *Symposium de génie électrique SGE 2014*